(19) Europäisches Patentamt European Patent Office Office européen des brevets

(11) **EP 2 862 324 B1**

(12) **FASCICULE DE BREVET EUROPEEN**

(45) Date de publication et mention de la délivrance du brevet:
**19.10.2016 Bulletin 2016/42**

(21) Numéro de dépôt: **13737317.1**

(22) Date de dépôt: **14.06.2013**

(51) Int Cl.:
**H04L 12/841** *(2013.01)*

(86) Numéro de dépôt international:
**PCT/FR2013/051397**

(87) Numéro de publication internationale:
**WO 2013/186502 (19.12.2013 Gazette 2013/51)**

(54) **PROCEDE ET DISPOSITIF D'ESTIMATION RAPIDE ET PEU INTRUSIVE DE LA BANDE PASSANTE DISPONIBLE ENTRE DEUX NŒUDS IP**

VERFAHREN UND VORRICHTUNG ZUR SCHNELLEN UND UNAUFFÄLLIGEN SCHÄTZUNG DER VERFÜGBAREN BANDBREITE ZWISCHEN ZWEI IP-KNOTEN

METHOD AND DEVICE FOR QUICK, UNOBTRUSIVE ESTIMATION OF THE AVAILABLE BANDWIDTH BETWEEN TWO IP NODES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2012 FR 1255630**

(43) Date de publication de la demande:
**22.04.2015 Bulletin 2015/17**

(73) Titulaire: **Orange**
**75015 Paris (FR)**

(72) Inventeur: **MUSSOT, Laurent**
**F-75002 Paris (FR)**

(56) Documents cités:
**WO-A1-2008/073610     US-A1- 2004 001 511**

**Description**

**Domaine de l'invention**

La présente invention dénommée LIFBE (« Low Intrusive Fast Bandwidth Estimation » selon la terminologie anglosaxonne) se rapporte au domaine des télécommunications. Au sein de ce domaine, l'invention se rapporte plus particulièrement aux techniques d'estimation de la bande passante disponible à partir d'une transmission de plusieurs paquets IP entre un noeud émetteur et un noeud destinataire relié par un réseau de télécommunication. La présente invention se réfère à la famille des méthodes actives (« active probing technique » selon la terminologie anglosaxonne). Le transport des paquets IP suit un chemin établi entre le noeud émetteur et le noeud destinataire d'un réseau composé de plusieurs liens qui peuvent être de nature filaire ou sans-fil. Certains liens de ce chemin peuvent présenter des caractéristiques de capacité qui évoluent avec l'environnement. Par exemple, la capacité d'un lien sans-fil peut varier selon les conditions radio impactant le débit maximum de transmission du canal aérien, suivant la modulation et le codage utilisé. Par ailleurs la charge de chaque lien représentant le trafic existant (« cross trafic » selon la terminologie anglosaxonne), en particulier dans le cas d'un même lien partagé avec d'autres flux IP, peut varier dans le temps. La bande passante disponible de chaque lien, définie comme la capacité moins le trafic existant de chaque lien, devient donc variable.

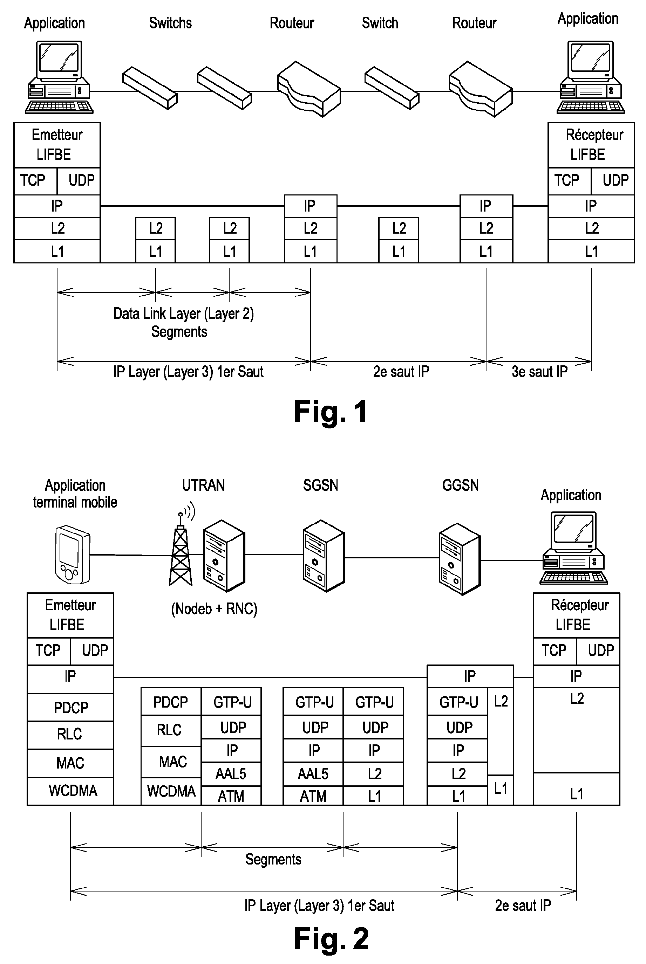

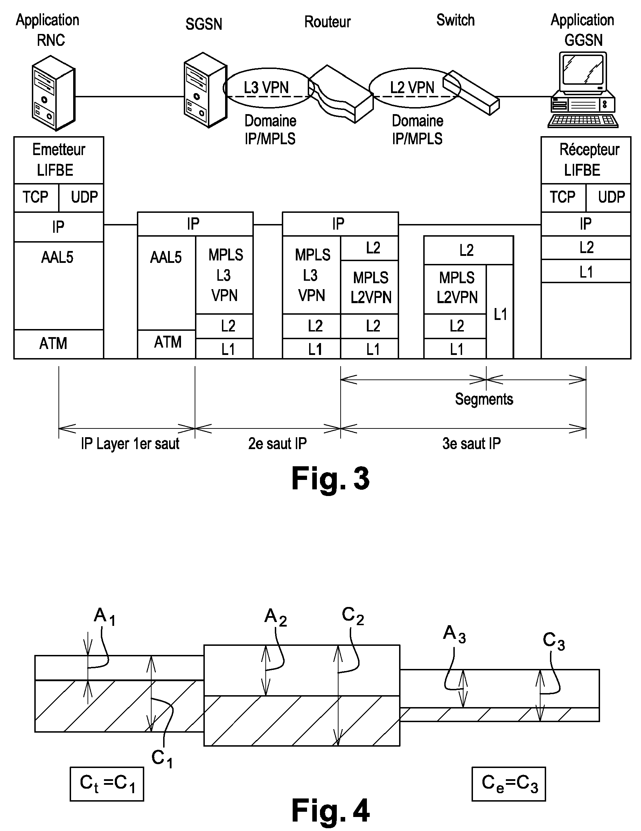

Dans la demande, la capacité et la bande passante disponible d'un réseau comprenant plusieurs liens sont définies au niveau de la couche IP entre un noeud émetteur et un noeud destinataire. Un lien représente une relation entre deux noeuds au niveau protocolaire des couches OSI, typiquement de niveau 3 avec la couche IP, ou de niveau inférieur par exemple avec la couche MAC (Media Access Control) de la technologie de transport utilisée. Lorsque le lien en question se réfère au niveau 3 de la couche IP, le terme de « saut » IP (« hop » selon la terminologie anglosaxonne) peut être employé. Lorsque le lien en question se réfère au niveau inférieur par exemple au niveau 2 de la couche MAC, le terme de « segment » peut être employé. La figure 1 est un schéma d'une configuration classique selon le modèle de référence en couches protocolaires OSI lorsque les deux noeuds sont des terminaux fixes. La couche IP de niveau 3 fait apparaître un chemin entre les deux noeuds qui est partagé en sauts IP délimités lors du passage par un routeur, ainsi un saut selon cette configuration est un lien entre un noeud et un routeur ou entre deux routeurs. La figure 2 est un schéma d'une configuration classique selon le même modèle lorsque l'un des deux noeuds est un terminal mobile. La figure 3 est un schéma d'une configuration classique selon le même modèle lorsque les deux noeuds sont des équipements fixes du réseau de transport.

Un saut du réseau (niveau 3) transmet des données sous forme de paquets IP à un débit (exprimé généralement en kbits/s ou Mbits/s) inférieur au débit offert par la couche de niveau 2 compte tenu de la signalisation (« overhead » selon la terminologie anglosaxonne) liée à l'encapsulation et à la mise en trame associées au changement de couches. Un saut IP de niveau 3 peut être composé à son tour de plusieurs segments de niveau 2 propres à chaque technologie de transport utilisée telle que Ethernet ou Wifi par exemple. Le temps de transmission $\Delta_{L3}$ d'un paquet IP de taille $L_{L3}$ est donné par la relation :

$$\Delta_{L3} = \frac{L_{L3} + H_{L2}}{C_{L2}} \tag{1}$$

avec $H_{L2}$ la signalisation (en nombre d'octets) liée aux changement de couches du niveau 2 au niveau 3 correspondant à l'encapsulation des paquets IP et avec $C_{L2}$ la capacité au niveau couche 2 du segment ayant la capacité de transmission la plus faible du saut correspondant.

La capacité au niveau couche 3 est alors donnée par la relation :

$$C_{L3} = \frac{L_{L3}}{\Delta_{L3}} = \frac{L_{L3}}{(L_{L3} + H_{L2})} C_{L2} \tag{2}$$

Ainsi, la capacité d'un lien IP correspondant à la couche de niveau 3 peut être déterminée à partir de la capacité de la couche de niveau 2 du segment le plus faible suivant les caractéristiques de transmission propres au support physique et à la technologie utilisée. Ainsi la technologie Fast Ethernet 100BASE-TX du standard IEEE 802.3 par exemple peut transmettre au niveau couche 2 un débit maximum de 100 Mbits/s. La Capacité d'un lien IP est considérée dans la demande comme la capacité maximale, c'est-à-dire celle qui correspond à la taille $L_{L3}$ maximale soit $L_{L3} = MTU$, avec MTU (« Maximum Transmission Unit » selon la terminologie anglosaxonne) égale à 1500 octets.

La capacité effective $C_e$ d'un réseau délimitant le chemin entre un noeud émetteur et un noeud destinataire avec H sauts IP, est limitée par la capacité du saut le plus restreint (« narrow link » selon la terminologie anglosaxonne) c'est-à-dire de plus faible capacité :

$$C_e=\min_{h=1,\ldots,H}\{C_h\}$$

La bande passante disponible Ab (« Available Bandwidth » selon la terminologie anglosaxonne) d'un réseau comprenant plusieurs liens est définie comme correspondant à la capacité inutilisée du lien le plus étroit (« tight » link selon la terminologie anglosaxonne) pour un intervalle de temps donné. Le lien le plus étroit d'un réseau correspond au saut IP ayant la plus faible bande passante disponible. La bande passante disponible Ab dépend de la charge de trafic $R_x$ (« IP cross-traffic » $R_x$ selon la terminologie anglosaxonne) et peut être vu comme l'augmentation maximum de débit qui peut être introduite sans perturber la charge de trafic $R_x$ déjà existante. Ainsi la bande passante disponible Ab d'un réseau de bout en bout correspond à la bande passante disponible la plus faible des différents sauts IP :

$$A_b=\min_{h=1,\ldots,H}\{A_i\}=C_t-R_x$$

Selon l'exemple d'un réseau composé de trois sauts IP illustré par la figure 4, la bande passante totale disponible est égale à la capacité inutilisée du premier lien puisqu'il est le plus étroit : $A_b=A_1$. La capacité du lien le plus étroit est noté $C_t$. Le saut le plus restreint est le troisième lien puisqu'il a la plus petite capacité : $C_e=C_3$. La bande passante disponible totale n'est pas dans ce cas liée au lien de plus faible capacité.

Quand $C_e=C_t$ alors le lien le plus restreint est aussi le lien le plus étroit, il est communément appelé goulot d'étranglement (« bottleneck link » selon la terminologie anglosaxonne).

Les données d'un flux IP peuvent correspondre à des images, il s'agit alors de données vidéo, elles peuvent correspondre à du son, il s'agit alors de données audio, elles peuvent correspondre à de l'information, il s'agit alors de données dites data, ou elles peuvent correspondre à toutes autres sources de toute nature.

L'information de bande passante disponible d'un réseau à un instant donné peut être utilisée pour atteindre plusieurs objectifs. Citons pour exemples l'amélioration de la Qos, l'amélioration du routage et la détection de problèmes réseau. Des outils existent depuis de nombreuses années pour obtenir ce type d'information mais généralement ils ont été conçus exclusivement pour le domaine filaire et sont inadaptés à un environnement variable tel que celui rencontré avec des réseaux sans-fil ou mobiles compte tenu de leur consommation de temps. En outre, l'accroissement des différents réseaux de télécommunication et leur utilisation croissante ont fait naître la notion de réseau hétérogène basée sur une complémentarité des différentes technologies d'accès radio (réseaux cellulaires de type 3GPP 2G/3G/4G, réseau WiFi de type IEEE 802.11a/b/g/n/..., réseau Wimax IEEE802.16/..., etc). La notion de réseau hétérogène répond en particulier à un objectif d'extension de la couverture radio et d'augmentation des capacités. La mobilité des utilisateurs entraîne des variations du trafic écoulé par un réseau d'accès. Ces variations peuvent conduire à des saturations. Pour prévenir ces saturations, il apparaît intéressant de pouvoir décharger à un instant donné un réseau d'accès. A cette fin, il est envisagé de basculer du trafic (« Offload » selon la terminologie anglosaxonne) d'un réseau à un autre, par exemple le basculement du trafic d'un utilisateur d'un réseau cellulaire vers un réseau local WiFi disponible. En particulier, les standards TS 23.402, TS 24.302 et TS 24.312 du 3GPP spécifient des aides à la décision de sélection de réseau d'accès pour les terminaux via la fonction ANDSF (« Access Network Discovery Selection Function » selon la terminologie anglosaxonne) en exploitant des informations d'état et de localisations des différents réseaux d'accès non-3GPP disponibles. Dans un autre cadre, Européen en l'espèce et en accord avec le mandat M/453 sous la supervision de l'ISO, du CEN et de l'ETSI, de nouveaux standards ITS (« Intelligent Transport System » selon la terminologie anglosaxonne) ont été développés principalement pour améliorer la sécurité routière et la gestion du trafic routier et pour permettre l'accès à Internet. Ces standards ETSI ITS comprennent le standard IEEE 802.11p dit WiFi véhiculaire ; ils définissent une architecture destinée aux voitures ou à tout autre véhicule de transport et mettent en avant la complémentarité avec les réseaux d'accès radio déjà existants (réseaux cellulaires, réseau WLAN, etc). De nouveau, la complémentarité associée à la mobilité met en valeur l'utilité d'un mécanisme de sélection d'accès radio. Les critères de décision les plus pertinents généralement retenus sont la qualité du signal reçu et la bande passante disponible.

**Art antérieur**

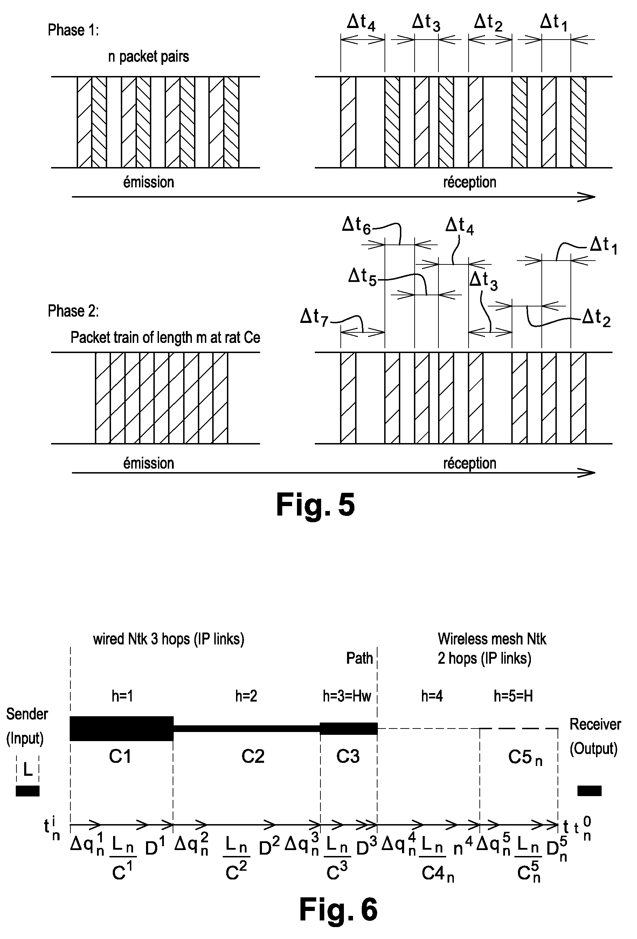

Pour obtenir une estimation de la bande passante disponible, il existe un outil appelé WBest conçu principalement pour les réseaux sans-fil de type Wifi, dont une description est donnée par [Ref1] qui fait partie d'une famille de techniques actives d'estimation directe (« direct active probing » selon la terminologie anglosaxonne). Il permet d'estimer la bande passante disponible entre deux noeuds d'un réseau à partir de l'envoi de paquets IP/UDP appelés sondes analysés à la réception par le deuxième noeud. L'outil Wbest inclut deux phases de transmission illustrées par la figure 5 : une première phase au cours de laquelle est transmise une série de paires de paquets et une seconde phase au cours de laquelle est transmis un train de paquets au débit correspondant à la capacité déterminée lors de la première phase. Les paires de paquets reçues permettent de mesurer les différents décalages temporels séparant deux paquets d'une paire. La valeur médiane des décalages temporels permet de déterminer une capacité effective $C_e$ correspondant au lien le plus restreint (« narrow » link). L'émetteur doit attendre le retour de la détermination de capacité effective effectuée par le récepteur avant de débuter la seconde phase. Par suite le délai total d'estimation comprend les deux phases de transmission et les deux retours d'information.

Le résultat final dépend fortement de l'estimation de la Capacité effective (Ce) obtenue lors de la première phase compte tenu d'une part que cette estimation de la Capacité effective Ce permet de fixer le débit de transmission du train de paquets de la deuxième phase et d'autre part que la Capacité effective (Ce) est directement utilisée dans la formule pour le calcul final de la bande passante disponible. Le calcul est donné par la formule suivante avec Ab correspondant à la bande passante disponible, Ce la capacité effective et R le débit moyen de dispersion de réception du train de paquets :

$$A_b = C_e \left( 2 - \frac{C_e}{R} \right) = 2C_e + \frac{C_e{}^2}{R}$$

Le manque de précision de Ce, qui est obtenue par calcul de la médiane des différents débits instantanés reçus lors de la première phase, peut entrainer une sous estimation de la bande passante disponible Ab si la capacité estimée est plus petite que la capacité réelle, car le débit de transmission du train de paquets lors de la deuxième phase est alors trop faible. En outre, une erreur sur l'estimation de la capacité Ce impacte fortement le résultat final compte tenu que Ce apparaît au carré dans la formule donnant la bande disponible. Cet impact se produit plus particulièrement si par exemple le trafic existant (« cross trafic » selon la terminolgie anglosaxonne) est trop important ou si la capacité maximum varie rapidement suite par exemple à un changement de modulation. En outre, le calcul de la bande passante disponible Ab pour un réseau hétérogène n'est valable que si la capacité effective correspond au lien radio ce qui n'est pas toujours le cas.

En outre, l'utilisation de l'outil Wbest sur un réseau cellulaire ne prend pas en compte la régulation de débit et le lissage du trafic (« traffic shaping » et « traffic policing » selon la terminologie Anglo-Saxonne) effectués au sein du coeur du réseau mobile qui peuvent intervenir après l'envoi des sondes. Il ne prend pas en compte non plus la relation entre le débit reçu mesuré et le nombre de paquets transmis car la limite n'est pas forcément atteinte lors de la transmission du train de paquets IP/UDP des sondes. La formule du calcul de la bande passante disponible n'est donc pas adaptée pour un réseau mobile.

Un autre exemple de l'art antérieur se trouve dans WO2008/073610.

**Exposé de l'invention**

La présente invention propose un procédé d'estimation de la bande disponible au niveau de la couche IP pour un chemin entre deux noeuds, ce chemin étant délimité par un réseau composé d'un ou plusieurs liens physiques filaires ou sans-fils, qui soit plus rapide et moins intrusif que les méthodes connues.

Ainsi, l'invention a pour objet un procédé d'estimation de la bande passante disponible au niveau de la couche IP pour un flux entre un noeud émetteur et un noeud destinataire séparés par un chemin composé d'un ou plusieurs liens, à partir d'un seul train de N trames de paquets IP/UDP généré à un certain débit de transmission. Ce flux est transporté par un réseau de télécommunication qui peut comprendre au moins un segment radio sur une partie du chemin. Le réseau peut transporter sur la totalité ou sur une partie du chemin d'autres flux IP. Le procédé comprend :

- une étape de réception par le noeud destinataire de l'unique train de N trames de paquets, une trame comprenant : un champ avec l'adresse IP du noeud émetteur, un champ avec l'adresse IP du noeud destinataire, un champ associé au format d'envoi de la trame, un paquet de taille L comprenant un champ d'horodatage dit date d'émission $t^i_n$ et un champ avec le numéro n du paquet correspondant au numéro n de la trame dans le train, n=1 à N, la réception d'une trame n déclenchant l'association d'une valeur d'horodatage dite date de réception $t^o_n$ au paquet n,
- à partir du deuxième paquet reçu, une étape de détermination par le noeud destinataire de valeurs de délais reçus cumulés à réception du paquet n, avec n=2 à N : $T_{(n-1)} = t^o_n - t^o_1$ ,
- une étape d'identification par le noeud destinataire de valeurs atypiques de gigue Jitter$_n$ entre les délais de transmission de paquets successifs, $Jitter_{(n-1)} = \left( t^o_{n+1} - t^i_{n+1} \right) - \left( t^o_n - t^i_n \right),$

- une étape d'exploitation par le noeud destinataire d'un modèle de régression appliqué aux délais reçus cumulés en fonction d'un délai d'envoi cumulé connaissant les valeurs atypiques de gigue.

L'invention a en outre pour objet un dispositif destiné à un réseau de télécommunication, adapté pour la mise en oeuvre d'un procédé d'estimation de la bande passante disponible au niveau de la couche IP à partir d'un seul train de N trames de paquets IP/UDP généré à un certain débit sendrate de transmission, pour un flux entre un noeud source et le dispositif séparés par un chemin composé d'un ou plusieurs liens. Le flux est transporté par un réseau de télécommunication qui peut comprendre au moins un segment radio sur une partie du chemin. Le réseau peut transporter sur la totalité ou sur une partie du chemin d'autres flux IP. Le dispositif comprend :

- un moyen de réception de l'unique train de N trames de paquets, une trame comprenant : un champ avec l'adresse IP du noeud source, un champ avec l'adresse IP du noeud destinataire, un champ associé au format d'envoi de la trame, un paquet de taille L comprenant un champ d'horodatage dit date d'émission $t^1_n$ et un champ avec le numéro n du paquet correspondant au numéro n de la trame dans le train, n=1 à N, la réception d'une trame n déclenchant l'association d'une valeur d'horodatage dite date de réception $t^o_n$ au paquet n,
- un moyen de détermination de valeurs de délais reçus cumulés $T_{(n-1)}$ à réception respectivement des paquets n et à partir du deuxième paquet reçu, avec n=2 à N : $T_{(n-1)} = t^o_n - t^o_1$,
- un moyen d'identification de valeurs atypiques de gigue $jitter_{n-1}$ entre les délais de transmission de paquets successifs :

$$Jitter_{(n-1)} = (t^o_{n+1} - t^i_{n+1}) - (t^o_n - t^i_n)$$

- un moyen d'exploitation d'un modèle de régression linéaire appliqué aux délais reçus cumulés approximés par la relation $T_x = a_i x + b_i$ correspondant à un segment i identifié par deux valeurs successives de valeurs atypiques de gigue de délais de transmission avec

$$A_b = C_e(1 - \frac{a}{L} sendrate) + sendrate.$$

L'invention a en outre pour objet un système de télécommunication pour la mise en oeuvre d'un procédé d'estimation de la bande passante disponible au niveau de la couche IP à partir d'un seul train de N trames de paquets IP/UDP généré à un certain débit sendrate de transmission, pour un flux entre un noeud source et un noeud destinataire séparés par un chemin composé d'un ou plusieurs liens selon l'invention. Le système comprend :

- un noeud source et un noeud destinataire séparés par le chemin qui peut comprendre au moins un segment radio,

dans lequel le noeud destinataire comprend :

- un moyen de réception de l'unique train de N trames de paquets, une trame comprenant : un champ avec l'adresse IP du noeud source, un champ avec l'adresse IP du noeud destinataire, un champ associé au format d'envoi de la trame, un paquet de taille L comprenant un champ d'horodatage dit date d'émission $t^i_n$ et un champ avec le numéro n du paquet correspondant au numéro n de la trame dans le train, n=1 à N, la réception d'une trame n déclenchant l'association d'une valeur d'horodatage dite date de réception $t^o_n$ au paquet n,

- un moyen de détermination de valeurs de délais reçus cumulés à réception respectivement des paquets n et à partir du deuxième paquet reçu, avec n=2 à N-1 : $T_{(n-1)} = t^o_n - t^o_1$,

- un moyen d'identification de valeurs atypiques de gigue entre les délais de transmission de paquets successifs :

$$Jitter_{(n-1)} = (t^o_{n+1} - t^i_{n+1}) - (t^o_n - t^i_n),$$

- un moyen d'exploitation d'un modèle de régression linéaire appliqué aux délais reçus cumulés approximés par la

relation $T_x = a_i x + bi$ correspondant à un segment de droite i identifié par deux valeurs successives de valeurs atypiques de gigue avec $A_b = C_e (1 - \frac{a}{L} sendrate) + sendrate$.

Selon l'invention, le destinataire reçoit un train de paquets de données encapsulés chacun dans une trame UDP, les paquets étant appelés aussi « sondes », à un certain débit constant ou variable, préalablement déterminé par l'émetteur. Si le débit est constant, il est supérieur à la capacité effective.

Lors de la réception d'un paquet n incrémenté de un à chaque paquet, le destinataire associe une date de réception $t^o_n$ (qui peut être relative ou absolue) et extrait du paquet n sa date d'émission. Le débit de transmission sendrate peut être déterminé par le destinataire par observation des dates d'émission contenues dans les paquets IP/UDP : $Sendrate = \frac{L}{t^i_{n+1} - t^i_n}$.

Le destinataire détermine un délai reçu cumulé $T_{(n-1)} = t^o_n - t^o_1$ ainsi qu'un délai d'envoi cumulé $\left(t^i_n - t^i_1\right)$ à partir du paquet n=2 et jusqu'au paquet n=N reçu.

Ainsi, le destinataire obtient pour chaque paquet reçu à partir du deuxième, identifié par son numéro n, une valeur de délai reçu cumulé et une valeur de délai d'envoi cumulé.

Selon l'invention, la courbe des délais reçus cumulés $T_{(n-1)}$ est interpolée par une régression par morceaux (« piecewise regression » selon la terminologie anglosaxonne) qui sont délimités par les valeurs atypiques de gigue identifiées préalablement.

Dans le cas d'un débit d'envoi constant la régression est de type linéaire. Les délais reçus cumulés sont approchés par la relation : $Tx = a_i x + b_i$ pour chaque segment de droite i délimités par des valeurs atypiques de gigue. Les coefficients déterminés par régression linéaire des différents segments de droite, i.e. les pentes $a_i$ et les constantes $b_i$ des expressions $T_x = a_i x + b_i$ permettent de déterminer la bande passante disponible $A_b$ connaissant la capacité effective $C_e$ et connaissant la taille L fixe d'un paquet :

$$A_b = C_e(1 - \frac{a}{L} sendrate) + sendrate.$$

Selon le mode de réalisation, la valeur finale de « a » peut être pondérée et moyennée à partir des dernières valeurs de $a_i$.

Dans le cas d'un débit d'envoi variable, le débit d'envoi varie en fonction du temps, il augmente selon un modèle choisi par l'émetteur (par exemple de façon linéaire), et à un instant donné sa valeur devient égale à la bande passante disponible. A cet instant, il y a un changement dans la transmission des paquets par le réseau. En effet, quand le débit d'envoi est supérieur à la bande passante disponible, le réseau doit temporiser la transmission des paquets ; le changement correspond à la gestion de files d'attente avec l'introduction de délais dus à ces files d'attente.

La courbe des délais cumulés en fonction du numéro n de paquet peut être approchée par une première relation tant que le débit est inférieur à la bande passante disponible puis par une seconde relation après l'introduction de délais dus aux files d'attente, le débit devenant supérieur à la bande passante disponible. Le basculement d'une relation à l'autre détermine un point de rupture qui correspond donc au moment où le débit devient égal à la bande passante disponible. La recherche d'un point de rupture permet d'obtenir une estimation de la bande passante disponible.

Contrairement aux méthodes actives classiques d'estimation itérative, (appelée « iterative active probing » selon la terminologie anglosaxonne) dont les plus connues sont TOPP (Train Of Packet Pairs), SLoPS (Self-Loading Periodic Streams appelé aussi Pathload) et enfin PathChirp qui attendent un retour d'information du récepteur pour adapter le débit de transmission des paquets des sondes, la présente invention dénommée LIFBE n'utilise qu'un seul train d'un faible nombre de paquets IP/UDP spécifiques appelés sondes (« probes » selon la terminologie anglosaxonne) envoyés à un certain débit déterminé avant l'envoi du train. La présente invention est non itérative car elle ne nécessite pas d'aller retour successif entre récepteur et émetteur pour converger et trouver le débit de transmission correspondant à la bande passante disponible. L'estimation de la bande passante selon l'invention est obtenue directement suite à l'émission d'un seul train de paquets.

L'envoi d'un seul train d'un faible nombre de paquets UDP, de 20 à 50 paquets environ, permet selon l'invention une estimation de la bande passante disponible $A_b$ entre un émetteur et un destinataire reliés par un réseau de télécommunication qui peut comprendre un segment radio sur une partie du chemin, tout en minimisant l'occupation de la bande passante. Compte tenu de la petite taille du train de paquet et de l'envoi d'un unique train, l'estimation de la bande passante selon l'invention est rapide et peu intrusive et adaptée à tout type de réseau filaire ou sans-fil.

La justesse de l'estimation obtenue permet une gestion de la QoS ce qui n'est pas possible lorsque la valeur estimée est erronée. En effet, une sous-estimation conduit à une perte d'efficacité et de débit maximum offerte à un utilisateur et une sur-estimation augmente le risque de congestion. En outre, une valeur estimée erronée peut conduire à une décision mauvaise concernant la sélection d'un réseau d'accès et concernant un basculement de charge (offload selon la terminologie anglosaxonne).

Le procédé est dynamique et donc bien adapté à une variation de la charge du lien entre l'émetteur et la destination qui peut intervenir plus particulièrement quand l'émetteur et/ou la destination sont mobiles ou du fait de conditions de propagation changeantes associées au segment radio.

L'estimation de bande passante disponible peut être effectuée périodiquement ou régulièrement en fonction de paramètres.

En mesurant régulièrement et en temps réel la bande passante disponible, un procédé selon l'invention permet d'optimiser l'utilisation de la ressource. Ainsi, le procédé selon l'invention permet d'éviter une perte de paquets en allouant la bande passante de façon optimale, au plus près de la capacité réelle du lien. La capacité du lien est dimensionnée par le segment de plus faible capacité qui correspond généralement au segment radio. Même si la capacité du segment radio diminue, le procédé selon l'invention permet d'ajuster en amont, avant toute perte de paquets, l'allocation de la bande passante disponible. Le caractère dynamique permet de lutter contre les situations de saturation en adaptant l'allocation de bande passante à la bande réellement disponible, voire d'anticiper les situations de blocage. Ce procédé est donc particulièrement adapté pour un système de télécommunication dans lequel un noeud est en mouvement du fait par exemple de son installation dans un moyen de transport, ce mouvement engendrant une modification de la capacité du segment radio et donc de la bande passante disponible du lien.

Selon un mode de réalisation d'un procédé selon l'invention, le débit d'envoi est constant et le modèle de régression est linéaire.

Selon un mode de réalisation d'un procédé selon l'invention, le procédé comprend en outre :

- une étape de détermination de la capacité effective au moyen d'un scan du segment radio ou au moyen de l'obtention d'information liée à la Qos.

Selon un mode de mise en oeuvre, le noeud lié par le segment radio (destinataire ou émetteur) scanne le canal radio qui correspond au segment radio. Lors de ce scan, le noeud peut récupérer certains paramètres dont le débit maximum de transmission possible pour un schéma de modulation et de codage donné (Modulation and Coding Scheme (MCS) selon la terminologie anglosaxonne). Ce débit maximum correspond à la capacité du segment à un instant donné. Cette capacité notée $C_{L2}$ est associée à un niveau 2 (couche MAC). Une valeur correspondante $C_{L3}$ peut être déterminée à un niveau 3 (couche IP) en pondérant la capacité de niveau 2 $C_{L2}$ par la place nécessaire à la signalisation utilisée au niveau de la couche 2 notée $H_{L2}$ relativement à la taille d'un paquet au niveau 3 notée $L_{L3}$. La valeur correspondante peut être obtenue par la formule suivante :

$$C_{L3} = C_{L2} \frac{1}{1 + \frac{H_{L2}}{L_{L3}}}$$

Selon un mode de mise en oeuvre qui correspond au cas où c'est le noeud destinataire qui est lié par le segment radio au réseau hétérogène, le noeud destinataire transmet au noeud émetteur la valeur de capacité de niveau 3 $C_{L3}$ lors d'une phase d'initialisation effectuée en TCP. La transmission de l'information est donc typiquement effectuée via le protocole TCP avant la transmission des paquets sondes en UDP.

Connaissant la capacité de niveau 3 $C_{L3}$, le noeud émetteur peut déterminer un débit d'envoi du train de paquet supérieur à cette capacité.

Selon un mode de mise en oeuvre qui correspond au cas ou l'émetteur ou le récepteur est un terminal mobile, le débit d'envoi est constant et fixé supérieur ou égal à un paramètre qui peut être obtenu au moyen d'une commande telle que la commande AT+CGEQNEG spécifiée dans le cadre du standard 3GPP TS 27.007. Le message de réponse à cette commande AT comprend un champ qui correspond au débit (en kbit/s) maximum en voie descendante et un champ qui correspond au débit (kbit/s) maximum en voie montante (Maximum bit rate MBR DL/UL).

De manière alternative ou complémentaire, la détermination de la capacité effective est réalisée au moyen de l'obtention d'information liée à la Qos. Lorsque les deux informations sont présentes (radio et Qos), la valeur de capacité effective Ce totale est la valeur la plus faible des deux.

Selon un mode de réalisation d'un procédé selon l'invention, le débit d'envoi est variable, le modèle de régression est non linéaire et l'étape d'exploitation comprend la recherche d'un point de rupture correspondant à un changement de modèle de régression, à partir des valeurs de délais reçus cumulés déterminés et des valeurs atypiques de gigue.

Selon ce mode de réalisation, le débit d'envoi varie en fonction du temps, il augmente selon un modèle choisi par l'émetteur (par exemple de façon linéaire) et à un instant donné sa valeur devient égale à la bande passante disponible. A cet instant, il y a un changement dans la transmission des paquets par le réseau puisque tant que le débit d'envoi est supérieur à la bande passante disponible, le réseau doit temporiser la transmission des paquets ; le changement correspond à la gestion de files d'attente avec l'introduction de délais dus à ces files d'attente. La courbe des délais cumulés en fonction du numéro de paquet peut être approchée par une première relation tant que le débit est inférieur à la bande passante disponible puis lors de l'introduction de délais dus aux files d'attente, le débit devenant supérieur à la bande passante disponible, la courbe doit être approchée par une seconde relation. Le basculement d'une relation à l'autre détermine un point de rupture qui correspond donc au moment où le débit devient égal à la bande passante disponible. La recherche d'un point de rupture permet d'obtenir une estimation de la bande passante disponible.

Ce mode de réalisation peut être mis en oeuvre avantageusement en l'absence de connaissance de la capacité effective. Néanmoins, le paramétrage doit être tel que le débit d'envoi dépasse la bande passante disponible au cours de la transmission des N paquets. Cette condition peut être garantie par une configuration adéquate du modèle de transmission (par exemple linéaire), du pas de variation (dans le cas d'une transmission linéaire le pas est tel que $sendrate_n = n*pas$) et du nombre de paquets N transmis (dans le cas d'une transmission linéaire le débit $sendrate_N = N*pas$ doit être forcément supérieur à la bande passante disponible).

Le(s) point(s) de rupture (« breakpoint » selon la terminologie anglosaxonne) peu(ven)t être déterminé(s) au moyen de la fonction médiane et d'une méthode itérative de régression. Les méthodes itératives de régression les plus connues sont Gauss-Newton ou LMA (Levenberg-Marquardt Algorithm).

Par exemple avec l'algorithme de régression itératif LMA, le point de rupture mentionné comme premier paramètre p0 à trouver par l'algorithme est également fonction de la bande passante disponible Ab. Ainsi lorsque le paquet n atteint le point de rupture p0, le débit de transmission variable Sendrate correspond à la bande passante Ab :

$$Sendrate_{n=p0} = \frac{L}{t^i_{p0+1} - t^i_{p0}} = Ab.$$

Le modèle de régression complet à exploiter par un algorithme de régression itératif tel que LMA, devient alors :

$$T_{(n-1)} = t^i_{median(2,n,p0)} + \left(\frac{L}{p1}\right) * (median(p0, n-1, N) - p0)$$

$$+ \left(1 - \frac{L}{p1 * (t^i_{p0+1} - t^i_{p0})}\right) * (t^i_{median(p0,n,N)} - t^i_{p0}) + c$$

avec la fonction median(X1,x,X2) = x si x est compris dans l'intervalle [X1,X2], median(X1,x,X2) = X1 si x <X1 et median(X1,x,X2) = X2 si x >X2, avec le paramètre p0 correspondant au point de rupture, avec le paramètre p1 correspondant à Ce, avec L correspondant à la taille fixe du paquet et avec le paramètre c correspondant à une constante qui change suivant la variation des délais de latence entre les paquets n et 1 : $D_n$ - $D_1$. Le nombre de paramètres p0,p1,p2,...pM à calculer par régression LMA dépend du nombre de changements de constantes correspondant au nombre de valeurs atypiques de gigue identifiées. Ainsi, la constante c correspond à un paramètre p(j+2) à partir de j=0, avec p(j+2) correspondant à la constante $D_n$ - $D_1$ pour un segment [n1,n2] entre deux valeurs atypiques de variation de délais de latence identifiées préalablement.

L'invention a en outre pour objet un dispositif destiné à un réseau de télécommunication, adapté pour la mise en oeuvre d'un procédé d'estimation de la bande passante disponible au niveau de la couche IP à partir d'un seul train de N trames de paquets IP/UDP généré à un débit variable de transmission, pour un flux entre un noeud source et le dispositif séparés par un chemin composé d'un ou plusieurs liens. Le flux est transporté par un réseau de télécommunication qui peut comprendre au moins un segment radio sur une partie du chemin. Le réseau peut transporter sur la totalité ou sur une partie du chemin d'autres flux IP appartenant à une même classe de service. Le dispositif comprend :

- un moyen de réception de l'unique train de N trames de paquets, une trame comprenant : un champ avec l'adresse IP du noeud source, un champ avec l'adresse IP du noeud destinataire, un champ associé au format d'envoi de la trame, un paquet de taille L comprenant un champ d'horodatage dit date d'émission $t^i_n$ et un champ avec le numéro n du paquet correspondant au numéro n de la trame dans le train, n=1 à N, la réception d'une trame n déclenchant l'association d'une valeur d'horodatage dite date de réception $t^o_n$ au paquet n,

- un moyen de détermination de valeurs de délais reçus cumulés, à partir du deuxième paquet reçu, à réception du paquet n, avec n=2 à N : $T_{(n-1)} = t_n^o - t_1^o,$

- un moyen d'identification de valeurs atypiques de gigue entre les délais de transmission de paquets successifs :

$$Jitter_{(n-1)} = (t_{n+1}^o - t_{n+1}^i) - (t_n^o - t_n^i),$$

- un moyen d'exploitation d'un modèle de régression non linéaire comprenant la recherche d'un point de rupture correspondant à un changement de modèle, à partir des valeurs de délais reçus cumulés déterminés et des valeurs atypiques de gigue.

L'invention a en outre pour objet un système de télécommunication pour la mise en oeuvre d'un procédé d'estimation de la bande passante disponible au niveau de la couche IP à partir d'un seul train de N trames de paquets IP/UDP généré à un débit variable de transmission, pour un flux entre un noeud source et un noeud destinataire séparés par un chemin composé d'un ou plusieurs liens selon l'invention. Le système comprend :

- un noeud source et un noeud destinataire séparés par le chemin qui peut comprendre au moins un segment radio,
- un lien de transport des flux entre le noeud source et le noeud destinataire qui peut comprendre au moins un segment radio,

dans lequel le noeud destinataire comprend :

- un moyen de réception de l'unique train de N trames de paquets, une trame comprenant : un champ avec l'adresse IP du noeud source, un champ avec l'adresse IP du noeud destinataire, un champ associé au format d'envoi de la trame, un paquet de taille L comprenant un champ d'horodatage dit date d'émission $t_n^i$ et un champ avec le numéro n du paquet correspondant au numéro n de la trame dans le train, la réception d'une trame n déclenchant l'association d'une valeur d'horodatage dite date de réception $t_n^o$ au paquet n,
- un moyen de détermination de valeurs de délais reçus cumulés à réception respectivement des paquets n et à partir du deuxième paquet reçu, avec n=2 à N: $T_{(n-1)} = t_n^o - t_1^o,$
- un moyen d'identification de valeurs atypiques de gigue entre les délais de transmission de paquets successifs $:Jitter_{(n-1)} = (t_{n+1}^o - t_{n+1}^i) - (t_n^o - t_n^i),$
- un moyen d'exploitation d'un modèle de régression non linéaire comprenant la recherche d'un point de rupture correspondant à un changement de modèle, à partir des valeurs de délais reçus cumulés déterminés et des valeurs atypiques de gigue.

Selon une implémentation préférée, les étapes d'un procédé selon l'invention d'estimation de la bande passante disponible au niveau de la couche IP pour un flux entre un noeud émetteur et un noeud destinataire séparés par un chemin composé d'un ou plusieurs liens sont déterminées par les instructions d'un programme sous forme d'un ou plusieurs modules incorporés respectivement dans des circuits électroniques telles des puces elles-mêmes pouvant être disposées dans un dispositif électronique tel un noeud. Un procédé selon l'invention d'estimation de la bande disponible peut tout aussi bien être mis en oeuvre lorsque ce programme (ou ses modules) est chargé dans un organe de calcul tel un processeur ou équivalent dont le fonctionnement est alors commandé par l'exécution du programme.

En conséquence, l'invention s'applique également à un programme d'ordinateur (ou ses différents modules), notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

Donc, l'invention a en outre pour objet un programme d'ordinateur sur un support d'informations, ledit program-

me comportant des instructions de programme adaptées à la mise en oeuvre d'un procédé selon un objet de l'invention, lorsque ledit programme est chargé et exécuté dans un noeud d'un système de télécommunication.

**[0057]** Et l'invention a en outre pour objet un support d'informations comportant des instructions de programme adaptées à la mise en oeuvre d'un procédé selon un objet de l'invention, lorsque ledit programme est chargé et exécuté dans un noeud d'un système de télécommunication.

**Liste des figures**

**[0058]** D'autres caractéristiques et avantages de l'invention apparaîtront lors de la description qui suit faite en regard de figures annexées données à titre d'exemples non limitatifs.

La figure 1 est un schéma d'une mise en oeuvre de l'invention dans un réseau à trois sauts IP établis entre deux noeuds correspondant à une configuration classique d'un réseau filaire selon le modèle de référence en couches protocolaires OSI faisant apparaître les différentes couches, lorsque ces deux noeuds sont des terminaux fixes.

La figure 2 est un schéma d'une mise en oeuvre de l'invention dans un réseau à deux sauts IP établis entre deux noeuds correspondant à une configuration classique d'un réseau hétérogène comprenant un réseau mobile UMTS selon le modèle de référence en couches protocolaires OSI faisant apparaître les différentes couches, lorsque l'un des deux noeuds est un terminal mobile.

La figure 3 est un schéma d'une mise en oeuvre de l'invention dans un réseau à trois sauts IP établis entre deux noeuds correspondant à une configuration classique d'un réseau hétérogène comprenant des domaines de Qos gérés par un mécanisme de tunnel IP/MPLS selon le modèle de référence en couches protocolaires OSI faisant apparaître les différentes couches, lorsque les deux noeuds sont des équipements fixes du réseau de transport.

La figure 4 est un schéma d'un exemple de réseau à trois sauts IP de capacités respectives $C_1$, $C_2$, $C_3$ et de bandes passantes disponibles respectives $A_1$, $A_2$, $A_3$, le 1$^{er}$ lien étant le plus étroit $C_t$=$C_1$, le 3$^e$ lien étant le plus restreint $C_e$=$C_3$.

La figure 5 est un schéma illustrant les deux phases de transmission de l'outil WBest de l'art antérieur.

La figure 6 est un schéma illustrant la métrique OWD dans le cas d'un lien composé de cinq sauts dont les trois premiers sauts correspondent à trois segments d'un réseau filaire et les deux sauts suivants correspondent à un réseau non filaire.

La figure 7 est un organigramme des principales étapes d'un procédé d'estimation de la bande disponible au niveau de la couche IP pour un flux entre un noeud émetteur et un noeud destinataire séparés par un chemin composé d'un ou plusieurs liens.

La figure 8 est un schéma d'une trame de sonde IP/UDP et de l'horodatage effectué d'une part par le noeud émetteur NOE et d'autre part par le noeud destinataire NOD.

La figure 9 est un schéma illustrant une première réalisation d'un premier mode de mise en oeuvre de l'invention selon laquelle le noeud récepteur est situé dans le réseau sans fil et selon laquelle une valeur de la capacité effective est obtenue par un scan radio.

La figure 10 est un schéma illustrant une deuxième réalisation du premier mode de mise en oeuvre de l'invention selon laquelle le noeud récepteur est situé dans le réseau sans fil et selon laquelle une valeur de la capacité effective est obtenue au moyen d'une commande AT dans un contexte de gestion de QoS.

La figure 11 est un schéma d'un exemple de mise en oeuvre de l'invention dans le contexte d'un routeur mobile MR installé dans un bus pour router des communications entre un passager et une entité distante.

La figure 12 est un schéma d'un exemple de structure simplifiée d'un noeud destinataire selon un objet de l'invention.

La figure 13 représente des valeurs de gigue *jitter* obtenues lors de l'envoi de sondes selon l'invention.

La figure 14 représente la courbe des temps cumulés de réception suite à l'envoi de sondes selon l'invention.

Les figures 15 à 17 représentent une même courbe de résultats de mesures réelles de délais reçus cumulés en fonction du numéro de paquet.

**Description de modes de réalisation de l'invention**

**[0059]** Le procédé d'estimation de la bande passante disponible selon l'invention se déroule au niveau de la couche IP. L'estimation de la bande disponible est effectuée pour un flux entre un noeud émetteur et un noeud destinataire séparés par un chemin composé d'un ou plusieurs liens d'un réseau de télécommunication. Le réseau peut transporter sur la totalité du chemin ou sur une partie de celui-ci d'autres flux IP en concurrence. Dans les différents calculs, le procédé selon l'invention prend en compte uniquement les flux IP appartenant à une même classe de service ou appartenant à une classe supérieure. En particulier, un noeud du réseau transmet (transmission communément réalisé par la fonction de routeur IP) les paquets de ces différents flux considérés et temporise si nécessaire la transmission de ces paquets. La temporisation est effectuée au moyen d'une file d'attente unique de type FIFO (First In First Out) si

le réseau ne gère pas de Qos (Quality Of Service) ou est effectuée par classe de service si la Qos est gérée. Dans ce dernier cas, différentes possibilités d'ordonnancement existent pour prioriser les files d'attente de différentes classes entre elles. Généralement, après priorisation, les files d'attente de différentes classes partagent dans tous les cas une file d'attente globale également de type FIFO. Compte tenu que les flux se rapportent à des applications qui peuvent nécessiter l'échange de données aussi bien dans un sens montant que dans un sens descendant, un noeud peut être simultanément ou alternativement émetteur et destinataire.

Par conséquent, le procédé peut être mis en oeuvre indifféremment pour le sens montant et/ou pour le sens descendant.

Ces flux sont transportés par le réseau de télécommunication qui peut comprendre au moins un segment radio sur une partie du chemin. Des flux provenant d'un autre noeud émetteur ou à destination d'un autre noeud destinataire peuvent être transportés par ce segment radio.

Lors d'une phase d'initialisation, les noeuds émetteur et destinataire initient une session en créant chacun une socket TCP et une socket UDP par l'attribution d'un port d'entrée/sortie. L'émetteur se connecte au destinataire en instaurant une connexion TCP en mode client/serveur. Le serveur TCP est soit l'émetteur, soit le destinataire. L'émetteur informe le destinataire du nombre N de trames IP/UDP appelées aussi sondes qu'il va lui transmettre dans la phase suivante.

Pendant cette phase de connexion en TCP, le destinataire informe l'émetteur de son aptitude à obtenir une information sur la capacité effective Ce soit au moyen d'un scan radio, soit au moyen d'information de Qos liée au maximum du débit de transmission autorisé. En fonction de son aptitude, le destinataire envoie la valeur de la capacité effective Ce à l'émetteur ou envoie une valeur nulle ou négative.

De manière optionnelle, l'émetteur peut transmettre au destinataire en TCP sa référence horaire (« NTP Référence time » du standard IETF RFC 5905 (Network Time Protocol version 4)) pour que le destinataire synchronise sur cette référence les valeurs d'horodatage qu'il attribue aux paquets de sondes reçues. Ce mode permet avantageusement d'éviter une dérive (« clock skew problem » selon la terminologie anglosaxonne) entre les horloges de l'émetteur et du destinataire.

Si l'émetteur est lui-même apte à obtenir une information sur la capacité effective Ce (par scan radio ou par information de Qos ), il compare cette valeur avec la valeur envoyée par le destinataire lors de la phase de connexion en TCP. La valeur Ce finale choisie est la plus faible des différentes valeurs. Si le noeud destinataire envoie une valeur nulle ou négative indiquant qu'il ne possède pas d'information de Ce, l'émetteur prend comme valeur finale de Ce celle qu'il a obtenu au préalable par son moyen propre. Dans tous les cas l'émetteur envoie par TCP au destinataire la valeur finale de la capacité effective Ce.

A l'issue de cette initialisation en TCP, le destinataire est prêt à recevoir des sondes.

Le temps de transmission d'un paquet n transmis par un réseau filaire comportant H sauts IP peut être évalué au moyen de la métrique OWD (One Way Delay » selon la terminologie anglosaxonne) qui s'exprime généralement sous la forme :

$$OWD_n = t_n^o - t_n^i = \sum_{h=1}^{H} (D^h + q_n^h + \frac{L_n}{C^h}) \qquad (1)$$

Dans un réseau hétérogène comprenant une partie filaire (dite « wired ») et une partie non filaire (dite « wireless ») qui peut correspondre par exemple à un seul segment radio ou à un réseau maillé (dit « mesh »), le temps de transmission d'un paquet entre deux noeuds IP dans le sens de transmission, évalué au moyen de la métrique OWD peut s'exprimer sous la forme :

$$t_n^o - t_n^i = OWD_n(wired) + OWD_n(wireless)$$
$$= \sum_{h=1}^{Hw} (D^h + q_n^h + \frac{L_n}{C^h}) + \sum_{h=Hw}^{H} (D_n^h + q_n^h + \frac{L_n}{C_n^h}) \qquad (2)$$

avec :

$t^0$ la date de réception (« output receiving time » selon la terminologie anglosaxonne),
$t^i$ la date de transmission (« input transmitting time» selon la terminologie anglosaxonne),
n le numéro du paquet (« packet number» selon la terminologie anglosaxonne),

h le numéro de saut (« hop number» selon la terminologie anglosaxonne),

Hw le nombre de sauts sur la partie filaire,

H-Hw le nombre de sauts sur la partie non filaire,

D le temps de latence dépendant de la propagation du signal par le saut h (« Latency delay depending on hop h signal propagation » selon la terminologie anglosaxonne),

q le délai introduit par les files d'attente et dépendant du reste du trafic dit "cross trafic" sur le saut h en question (« Queuing delay depending on IP cross traffic of hop h» selon la terminologie anglosaxonne),

L/C le délai de transmission (« Transmission delay» selon la terminologie anglosaxonne),

L la taille du paquet (« packet size» selon la terminologie anglosaxonne),

C la capacité du saut h (« Capacity of hop h» selon la terminologie anglosaxonne).

En effet, dans un réseau filaire, la capacité C et le temps de latence D d'un saut h sont généralement constants au cours du temps. Ils ne dépendent donc pas du numéro du paquet n alors que pour un réseau non filaire, la capacité C dépend du schéma de modulation et de codage MCS (« Modulation and coding scheme » selon la terminologie anglosaxonne, (BPSK, QPSK, 16QAM,....,CRC,...)) qui est habituellement lié aux conditions radio (force du signal (« signal strength» selon la terminologie anglosaxonne), rapport signal à bruit (SINR)). En outre, le temps de latence D peut varier en fonction des variations du temps de propagation et des retransmissions de trames intervenant au niveau des couches basses (PHY/MAC).

L'équation (2) est illustrée par la figure 6 dans le cas d'un lien composé de cinq sauts dont les trois premiers sauts correspondent à trois segments d'un réseau filaire et les deux sauts suivants correspondent à deux segments d'un réseau non filaire. En exploitant l'équation (2) pour les paquets n et n+1, il vient :

$$t_{n+1}^o - t_n^o = t_{n+1}^i - t_n^i + \Delta q_n^{(total)} + D_{n+1}^{(wireless)} - D_n^{(wireless)} + \frac{L}{C_{n+1}^{(wireless)}} - \frac{L}{C_n^{(wireless)}}$$

$$(4)$$

Pour simplifier, la capacité C et la latence D peuvent être considérées variables dans le temps seulement pour la partie sans-fil (« wireless ») dans l'équation ci-dessus. Toutefois, un réseau uniquement filaire peut également présenter des variations de capacité C et de latence D, par exemple dans le cas de retransmission des couches inférieures. Par conséquent, dans la suite du document, le terme variable $D_n$ peut donc indifféremment désigner une partie sans-fil ou une partie filaire.

Le débit d'envoi Sendrate du train de sondes peut s'exprimer sous la forme : $Sendrate_n = \frac{L}{t_{n+1}^i - t_n^i}$ lorsque la taille des paquets des sondes est fixe.

En considérant un trafic parallèle (« cross traffic ») constant de flux de même classe ou de classe supérieure partageant une même file d'attente de type FIFO, le délai d'attente total $\Delta q_n^{(total)}$ est directement proportionnel à la bande passante disponible et au débit de transmission généré par un flux supplémentaire. Il est habituellement exprimé sous la forme suivante lorsque le débit de transmission Sendrate est supérieur à la bande passante disponible Ab:

$$\Delta q_n^{total} = \frac{L}{C_e}\left(1 - \frac{A_b}{Sendrate_n}\right) = \frac{L}{C_e}\left(1 - \frac{A_b}{L}\left(t_{n+1}^i - t_n^i\right)\right) \qquad (5)$$

Le délai d'attente étant toujours positif, si le débit de transmission Sendrate est inférieur ou égal à Ab, alors $\Delta q_n^{total} = 0$. En effet, si la bande passante est suffisante, il n'y a pas de délai engendré par une file d'attente entre le paquet n et le paquet n+1.

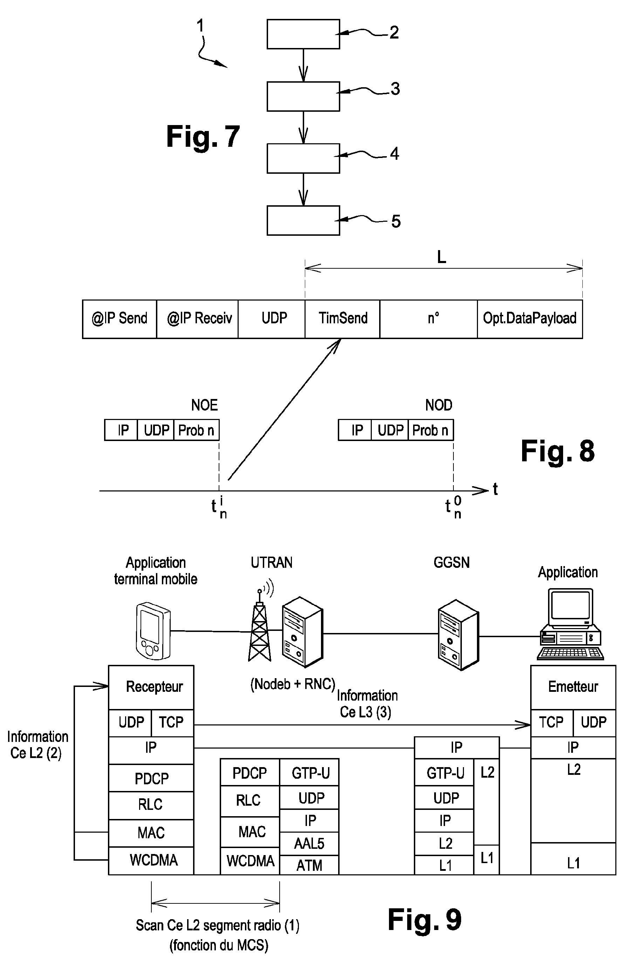

La figure 7 est un organigramme des principales étapes du procédé d'estimation de la bande passante disponible au niveau de la couche IP pour un flux entre un noeud émetteur et un noeud destinataire.

Le procédé 1 comprend une étape 2 de réception par le noeud destinataire d'un unique train de N trames de paquets IP/UDP ou sondes, une étape 3 de détermination par le noeud destinataire de valeurs de délais reçus cumulés, une étape 4 d'identification par le noeud destinataire de valeurs atypiques de gigue entre les délais de transmission de paquets successifs et une étape 5 d'exploitation par le noeud destinataire d'un modèle de régression.

Le noeud destinataire reçoit 2 l'unique train de N trames de paquets IP/UDP ou sondes émis à un certain débit Sendrate. Une trame illustrée par la figure 8 comprend : un champ avec l'adresse IP du noeud source @ IP Send, un champ avec l'adresse IP du noeud destinataire@ IP Receiv, un champ associé au format d'envoi de la trame UDP, un paquet de taille L comprenant un champ d'horodatage TimSend dit date d'envoi $t^i_n$ et un champ N° avec le numéro n du paquet correspondant au numéro n de la trame dans le train (avec n variant de 1 à N) ainsi qu'un champ optionnel Opt.DataPayload qui contient par exemple des données de bourrage pour atteindre la taille MTU. Le paquet de taille L appelé sonde est donc encapsulé dans un paquet de format typiquement UDP et inséré dans une trame IP. Le champ d'horodatage TimSend est renseigné de la date d'envoi par le noeud émetteur NOE lors du passage de la trame IP à la couche basse, c'est-à-dire typiquement à la couche de niveau 2 dite MAC (Media Access Control). La réception par le noeud destinataire NOD d'une trame n déclenche l'association d'une valeur d'horodatage dite date de réception $t^o_n$ au paquet n contenu dans la trame n.

La détermination 3 par le noeud destinataire des valeurs de délais reçus cumulés s'effectue à réception des paquets. Les valeurs de délais reçus cumulés sont calculées et enregistrées à partir du paquet reçu n=2 et jusqu' au paquet reçu n=N.

Le délai reçu cumulé s'exprime par la relation :

$$T_{(n-1)} = \sum_{k=1}^{k=n-1} (t^o_{k+1} - t^o_k) = t^o_n - t^o_1$$

Les délais reçus cumulés peuvent être approchés (« curve fitting » selon la terminologie Anglo-Saxonne) par un modèle de régression qui tient compte d'un délai d'envoi cumulé. Le modèle utilisé pour la régression découle des équations (4) et (5). La courbe des délais reçus cumulés est ainsi approchée à partir du deuxième paquet n=2, par la relation suivante :

$$T_{(n-1)} = \left(\frac{L}{C_e}\right) * (n-1) + \frac{(C_e - A_b)}{C_e} * (t^i_n - t^i_1) + D_n - D_1 \tag{7}$$

avec $A_b$ la bande passante disponible, $Ce$ la capacité effective et $D_n$ et $D_1$ les temps de propagation variables respectivement des paquets n et n=1. L'expression (7) est obtenue à partir des équations (4) et (5) en considérant que la capacité variable $C_n$ des segments est constante sur la fenêtre temporelle considérée correspondant à la transmission du train de paquets IP/UDP. Sur cette fenêtre, le schéma de modulation et de codage MCS est considéré donc comme inchangé. Ceci est vérifié pour un train avec un faible nombre N de paquets IP.

Le terme $D_n$ - $D_1$ peut être approché par une constante lorsque les temps de latence $D_n$ sont proches sur un intervalle considéré. Par exemple entre le paquet n=2 et le paquet n=8 les différences $D_n$ - $D_1$ peuvent être sensiblement égales. Par contre, la constante change dès qu'une retransmission a lieu au niveau des couches basses ou suite à tout autre délais supplémentaire significatif, entre un paquet IP (n) et le paquet IP suivant (n+1).

L'étape 4 d'identification par le noeud destinataire de valeurs atypiques de gigue entre les délais de transmission de paquets successifs permet d'identifier des points de changement de constante. Cette identification peut être réalisée par une méthode d'identification des points anormaux (atypiques) des valeurs de gigue (« jitter » selon la terminologie Anglo-Saxonne) telle que la méthode de la boîte à moustaches («Box plot » selon la terminologie Anglo-Saxonne).

Le procédé selon la méthode de la boite à moustaches consiste à trier tout d'abord les données par ordre croissant pour ensuite déterminer la valeur du premier quartile (noté Q1) et du 3ᵉ quartile (noté Q3). Le procédé détermine le second quartile qui correspond à la médiane, puis cherche la médiane de la première moitié des données qui correspond au 1ᵉʳ quartile. Le procédé cherche ensuite la médiane de la seconde moitié des données qui correspond au troisième quartile. Le procédé détermine ensuite l'écart inter-quartile : E=Q3-Q1. Les valeurs anormales ou atypiques sont celles qui sont en dehors des bornes inférieures et supérieures identifiées par :

- LIF=Q1-1.5*E
- UIF=Q3+1.5*E
- (LIF pour "lower inner fence" et UIF pour "Upper inner fence").
- Les valeurs de gigue Jitter$_n$ sont définies pour un paquet n variant de n=2 à N par la relation suivante :

$$Jitter_{(n-1)} = OWD_{n+1} - OWD_n = (t^o_{n+1} - t^i_{n+1}) - (t^o_n - t^i_n)$$
$$= \Delta q^{total}_n + D_{n+1} - D_n$$

Les délais d'attente $\Delta q_n^{(total)}$ ne génèrent pas de variation forte contrairement aux délais de latence D qui peuvent varier subitement suite à une retransmission. Ainsi dès qu'une valeur de gigue devient « anormale » suivant la méthode de la boite à moustaches, la constante égale au terme $D_n$ - $D_1$ change. Cette constante est alors utilisée pour la régression selon l'équation (7).

Ainsi lors de l'étape 4, l'observation des valeurs de gigue par la méthode de la boite à moustache permet de connaître le nombre de changement de constantes et d'identifier le moment où la constante change. Par exemple si la valeur de gigue pour n=6 est anormale suivant la méthode de la boite à moustaches, alors la constante utilisée pour la régression avec l'expression (7) change à partir de n=6.

Le noeud destinataire exploite 5 un modèle de régression appliqué aux délais reçus cumulés selon la relation (7). La régression (appelée aussi ajustement de courbe ou « curve fitting » selon la terminolgie Anglo-Saxonne) utilisée permet de déterminer les coefficients de la relation (7) qui minimisent l'erreur au sens des moindres carrés entre les points issus du calcul de la relation et les valeurs réelles des délais reçus cumulés $T_{(n-1)}$.

L'équation (7) se simplifie selon que le débit de transmission Sendrate est constant ou variable.

Selon un premier mode de mise en oeuvre, le débit de transmission Sendrate est constant et l'équation (7) peut s'exprimer sous la forme :

$$T_{(n-1)} = a * (n - 1) + D_n - D_1 \tag{8}$$

avec

$$a = \frac{L}{C_e} \frac{(C_e + sendrate - A_b)}{sendrate}$$

L'étape 4 permet de déterminer à quel moment la constante $D_n$ - $D_1$ change.

L'équation (8) caractérise donc une régression linéaire par morceaux avec des points de changement de segments de droite identifiés lors de l'étape 4.

Ainsi les différentes valeurs de la pente « a » et de la constante peuvent être déterminées par régression linéaire réalisée par la méthode des moindres carrés sur les segments de droite délimités par deux points de rupture (i.e. lors d'un changement de constante). Par exemple, si des valeurs atypiques de gigue sont identifiées à n=9 et n=19, alors une régression linéaire est réalisée sur l'intervalle de n=2 à n=8, sur l'intervalle de n=9 à n=18 et enfin sur l'intervalle de n=19 à N. A chaque segment de droite correspond une valeur de pente « a » et une constante obtenues par régression linéaire. La valeur « a » à considérer dans le calcul final peut être pondérée et moyennée entre les différentes valeurs de « a » correspondant aux différents segments de droite.

Selon ce mode de réalisation, le débit de transmission Sendrate est constant et l'information de la capacité effective Ce est connue au préalable. Ab peut être déduit à partir du coefficient « a » de la pente de la droite (éventuellement pondéré et moyenné suivant les derniers segments de droites) :

$$A_b = C_e(1 - \frac{a}{L} sendrate) + sendrate$$

Selon un deuxième mode, le débit de transmission est variable et dépasse la bande passante disponible à un moment donné lors de l'envoi des N paquets composant le train. La régression peut être résolue par une méthode itérative telle que LMA (Levenberg-Marquardt Algorithm) [Ref2]. L'algorithme de Levenberg-Marquardt permet d'obtenir une solution numérique au problème de minimisation d'une fonction qui n'est pas obligatoirement non linéaire et qui dépend de plusieurs variables. L'algorithme interpole l'algorithme de Gauss-Newton et l'algorithme du gradient. L'application principale de LMA est généralement la régression via la méthode des moindres carrés : étant donné un certain nombre de paires de données $(t_i, y_i)$, le procédé cherche le paramètre **a** de la fonction $f(t|a)$ tel que la somme des carrés des déviations soit minimale :

$$S(a) = \sum_{i=1}^{m} [y_i - f(t_i|a)]^2$$

Si le débit de transmission est trop faible et ne dépasse pas Ab alors le délai d'attente $\Delta q_n^{(total)}$ exprimé selon l'équation (5) est nul et l'expression du délai cumulé de réception $T_{(n-1)}$ devient :

$$T_{(n-1)} = (t_n^i - t_1^i) + D_n - D_1 \quad (9)$$

Lorsque le débit de transmission est variable, le procédé détermine le point de rupture auquel correspond un changement de modèle entre l'équation (9) et l'équation (7). En effet, le point de rupture mentionné comme premier paramètre p0 à déterminer par l'algorithme de régression itératif LMA, est également fonction de la bande passante disponible Ab. Ainsi lorsque le paquet n atteint le point de rupture p0, le débit de transmission variable Sendrate correspond à la bande passante disponible Ab :

$$Sendrate_{n=p0} = \frac{L}{t_{p0+1}^i - t_{p0}^i} = Ab$$

Le modèle de régression complet à exploiter par un algorithme de régression itératif tel que LMA, devient alors :

$$T_{(n-1)} = t_{median(2,n,p0)}^i + \left(\frac{L}{p1}\right) * (median(p0, n-1, N) - p0)$$
$$+ \left(1 - \frac{L}{p1 * (t_{p0+1}^i - t_{p0}^i)}\right) * (t_{median(p0,n,N)}^i - t_{p0}^i) + c$$

avec la fonction median(X1,x,X2) = x si x est compris dans l'intervalle [X1,X2], median(X1,x,X2) = X1 si x <X1 et median(X1,x,X2) = X2 si x >X2, avec p0 le paramètre correspondant au point de rupture, avec p1 le paramètre correspondant à Ce, avec L la taille fixe du paquet et avec c la constante qui change suivant la différence $D_n$ - $D_1$.

Le nombre de paramètres p0,p1,p2,...pM à calculer par régression LMA dépend du nombre de changements de constantes identifiés lors de l'étape 4. Ainsi, la constante c correspond à un paramètre p(j+2) à partir de j=0, avec p(j+2) correspondant à la constante $D_n$ - $D_1$ pour l'intervalle [n1,n2] entre deux valeurs atypiques de gigue pour le paquet n1 et le paquet n2 identifiées lors de l'étape 4.

Ainsi, la détermination des paramètres optimaux par régression LMA permet de déterminer la capacité effective Ce=p1 et la bande passante disponible Ab :

$$Sendrate_{n=p0} = \frac{L}{t_{p0+1}^i - t_{p0}^i} = Ab$$

Selon un mode de réalisation particulier du premier mode illustré par la figure 9, le procédé 1 comprend en outre :

- une étape de détermination de la capacité effective au moyen d'un scan du segment radio.

Ce mode est plus particulièrement adapté aux cas où un des deux noeuds émetteur ou destinataire est mobile et lorsque le lien radio est considéré comme étant celui de plus faible capacité. Ce noeud mobile est donc connecté selon une liaison sans fil dite radio. Ce noeud peut trouver le débit maximum de transmission possible au niveau de la couche physique au moyen d'un scan de son environnement sans fil. Ce débit peut être assimilé à la capacité effective pour un schéma MCS (Modulation Code Scheme) donné.

Cette information peut être statique, elle correspond à un maximum physique. Toutefois, l'obtention par un scan radio dépend de l'autorisation du constructeur à accéder à cette information. Par exemple, un terminal de type HSDPA (« High-Speed Downlink Packet Access» selon la terminologie anglosaxonne) de catégorie 10 peut transporter au maximum 10 codes HS-DSCH avec une modulation 16-QAM, donnant lieu à un débit maximum théorique de 7,2 Mbits/s au niveau de la couche physique.

L'information de scan radio peut être dynamique et donc plus rigoureuse. L'obtention du débit dépend également de l'autorisation d'accès à cette information et se fait selon des commandes propres au constructeur et à la technologie sans-fil utilisée. Par exemple, dans un environnement avec une transmission non filaire de type WiFi, relatif à un des standards de la famille IEEE802.11 (802.11a/b/g...), le noeud peut obtenir une information du maximum de débit possible sur la liaison WiFi suivant le « data rate » utilisé: 54Mbits/s, 27Mbits/s...6Mbits/s.

Donc selon ce mode, le noeud émetteur émet le train de paquets avec un débit constant supérieur à la capacité effective préalablement déterminée. Lorsque le scan n'est pas effectué par le noeud émetteur mais par le noeud destinataire, ce dernier communique au noeud émetteur la valeur obtenue lors du scan.

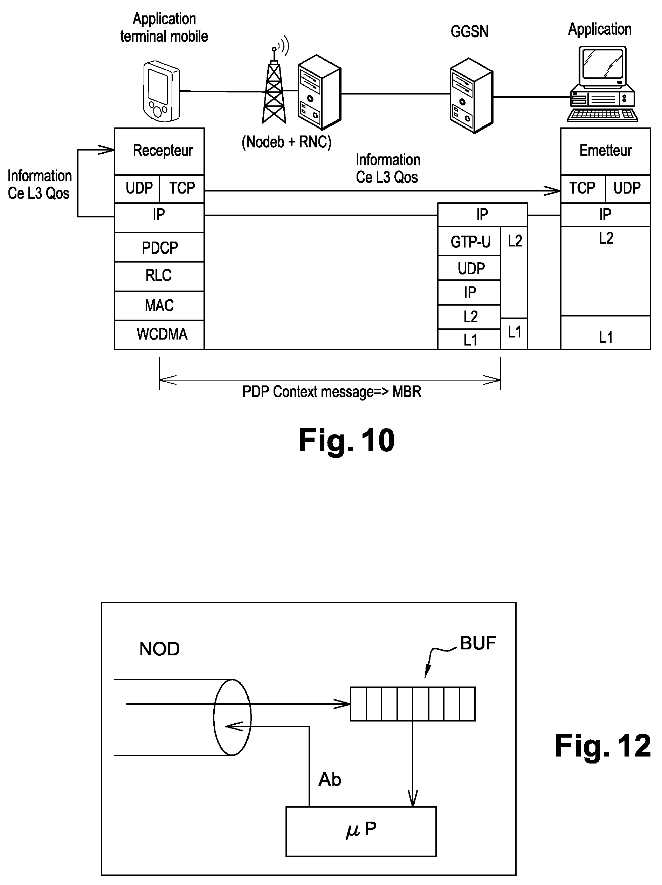

Selon un autre mode de réalisation particulier du premier mode illustré par la figure 10, le procédé 1 comprend en outre :

- une étape de détermination de la capacité effective au moyen d'une information de Qos.

Ce mode est plus particulièrement adapté à un réseau hétérogène qui pratique une gestion de la QoS et pour lequel le lien le plus étroit est situé dans le réseau gérant la Qos. La capacité effective peut être assimilée au débit maximum MBR (« Maximum bit rate ») autorisé par le réseau gérant la Qos. Un des noeuds peut obtenir la valeur MBR négociée et attribuée par l'opérateur du réseau. Par exemple, dans le cas d'un réseau cellulaire de type GSM ou UMTS, ce débit MBR peut être obtenu au moyen d'une commande AT du standard 3GPP TS 27.007. La commande AT+CGEQNEG permet d'obtenir le débit MBR (kbits/s) autorisé et inclus dans le message « Activate PDP Context Accept ».

Selon ce mode, le noeud émetteur émet le train de paquets avec un débit constant supérieur à la capacité effective préalablement déterminée. Lorsque l'information de Qos n'est pas accessible directement par le noeud émetteur, le noeud destinataire communique au noeud émetteur la valeur obtenue de Qos.

Si la capacité effective ne peut être obtenue ni par scan radio, ni par information Qos alors le débit de transmission Sendrate du train de N paquets IP/UDP est variable, par exemple de façon linéaire.

Par contre, si l'information de capacité effective est accessible par au moins l'un des deux noeuds émetteur et destinataire, le débit de transmission du train de N paquets IP/UDP peut être constant, en considérant que l'information de cette capacité effective est fiable. Dans le cas où plusieurs informations de capacité effective Ce sont disponibles, la plus faible valeur de Ce est choisie par le noeud émetteur. Dans le cas où la capacité la plus faible est déterminée par le noeud émetteur, l'information de la capacité Ce est communiquée en TCP au destinataire avant la transmission des paquets IP/UDP.

Le destinataire peut déterminer le débit d'envoi en extrayant des sondes reçues la date d'envoi : $\left(t_n^i - t_1^i\right)$.

Le procédé est dynamique car la détermination de la bande passante disponible est réactualisée soit périodiquement, soit de manière déclenchée. Si la bande passante disponible se réduit du fait de modifications d'utilisation du canal radio, l'estimation de la bande passante disponible diminue. Chaque détermination de bande passante disponible ne nécessite qu'un unique train de N trames de sondes.

Selon un mode de réalisation, entre deux déroulements successifs du procédé, la détection d'un évènement particulier (par exemple un changement de cellule d'un noeud d'extrémité) génère un message d'alerte qui va déclencher une nouvelle estimation de la bande passante disponible. Après ce déclenchement, les estimations peuvent reprendre avec une même périodicité.

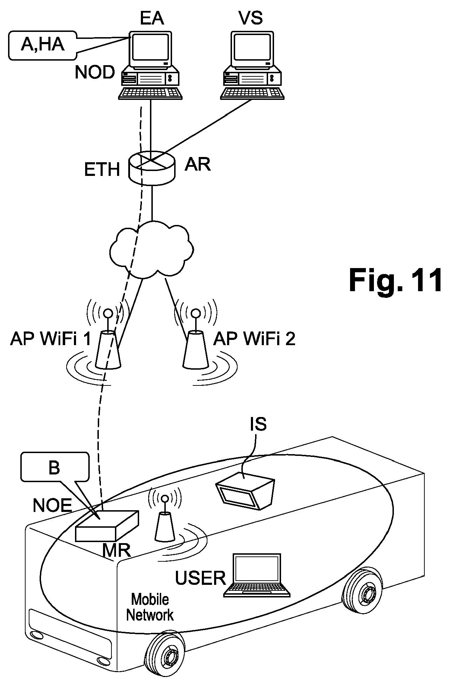

La figure 11 représente schématiquement un exemple de mise en oeuvre de l'invention dans le contexte d'un routeur mobile MR installé dans un bus pour router des communications entre un passager USER et une entité distante VS.

Le système de télécommunication comprend un point d'accès AP et le routeur mobile MR embarqués dans le bus, plusieurs points d'accès AP1, AP2,... disposés le long du trajet du bus, un routeur d'accès AR, un équipement de réseau EA connecté au routeur d'accès AR et un serveur vidéo VS accessible via le routeur d'accès AR.

Le noeud émetteur correspond au routeur mobile MR. Le noeud destinataire correspond à l'équipement de réseau EA dans lequel est implémenté un agent mère HA (« Home Agent » selon la terminologie anglosaxonne) en référence à un standard de gestion de la mobilité par des mécanismes IP, tels que MobileIP(MIP). L'agent mère HA connaît en permanence le réseau d'accès à travers lequel il est possible de joindre le routeur mobile MR. Le noeud émetteur et le noeud destinataire sont séparés par un lien qui comprend un segment radio entre le routeur mobile et un point d'accès disposé le long du trajet. Ce lien permet le transport des flux entre le noeud émetteur et le noeud destinataire. Le trafic issu et à destination du routeur mobile MR transite en totalité par l'agent mère HA. Le routeur mobile MR est un équipement installé dans un moyen de transport (bus, TGV, etc) qui permet aux utilisateurs, les voyageurs à bord et les applications métiers liées au transport en commun, d'accéder aux services du réseau au sol.

Le procédé d'estimation de la bande passante disponible selon l'invention est mis en oeuvre lors de l'exécution de deux modules B, A logiciels respectivement implémentés dans le noeud source et le noeud destinataire, selon l'exemple le routeur mobile MR et l'équipement de réseau. S'agissant d'estimation de la bande passante disponible pour des flux associés à des communications généralement bidirectionnelles, chaque noeud est simultanément ou alternativement source et destinataire. Le module A implémenté avec l'agent mère HA dans le noeud destinataire assure l'estimation de la bande passante disponible pour le trafic en sortie du noeud émetteur, le routeur mobile, vers l'équipement de réseau, pour le sens montant (« up »). Symétriquement, le module B implémenté dans le routeur mobile MR assure l'estimation de la bande passante disponible du trafic en sens inverse, c'est-à-dire pour le sens descendant (« down »).

Chacun des modules A, B peut gérer une file d'attente FIFO (abréviation des termes anglo saxons First In First Out) vers laquelle sont aiguillés les flux de trafic d'une même classe de service, cet aiguillage s'appuie par exemple sur des caractéristiques définies par un modèle d'architecture de classification tel que « Differentiated Services ». Ce modèle d'architecture réseau « Differentiated Services » définit comment classer et contrôler le trafic IP pour assurer la QoS. Cette architecture est détaillée principalement dans deux Appel à Commentaires RFC (« Requests For Comments ») le RFC 2474 et le RFC 2475 émis par la communauté internationale IETF (The Internet Engineering Task Force).

La file reçoit par exemple les trafics VoIP ou Vidéo ou Best Effort (trafic au mieux) ou Background (trafic de fond) provenant des différents passagers.

En cas de gestion d'une file d'attente, chaque module A, B comprend un gestionnaire de la file d'attente qui extrait les paquets de la file d'attente à un certain débit.

Pour utiliser de manière efficace le lien compte tenu de sa capacité qui peut être fluctuante, les modules A, B estiment dynamiquement en temps réel la bande passante disponible sur le lien pour les flux à destination de l'équipement de réseau EA, respectivement à destination du routeur mobile et transmettent les paquets à un débit correspondant à la bande passante disponible estimée.

La bande disponible est estimée de bout en bout, elle est équivalente à la bande du segment le plus étroit comme illustré par la figure 4 qui correspond selon l'exemple illustré par la figure 11 au segment radio WiFi entre le routeur mobile MR et un des points d'accès AP1, AP2,...

Chaque module A, B estime la bande disponible entre les noeuds EA et MR dans le sens montant, respectivement descendant, au moyen d'un procédé selon l'invention.

L'algorithme d'estimation de bande passante disponible se déroule suite à l'ouverture d'une connexion TCP entre les noeuds d'extrémité EA et MR.

En fonction du sens, descendant ou montant, le noeud émetteur EA ou MR émet à un certain débit un signal composé d'un unique train de N trames de sondes.

Dans une première étape, le noeud destinataire réceptionne l'unique train de N trames de sondes. Le noeud destinataire associe à chaque trame n reçue une valeur d'horodatage dite date de réception $t_n^o$ du paquet n de la trame n, n=1 à N.

Dans une deuxième étape, le noeud destinataire détermine pour chaque paquet n reçu à partir du deuxième paquet n=2, une valeur d'un délai reçu cumulé en calculant l'expression :

$$T_{(n-1)} = t_n^o - t_1^o$$

Dans une troisième étape, grâce à la méthode de la boite à moustache, le noeud destinataire identifie les valeurs atypiques de gigue Jitter définies par :

$$Jitter_{(n-1)} = \left(t_{n+1}^o - t_{n+1}^i\right) - \left(t_n^o - t_n^i\right)$$

ce qui permet d'identifier les changements des valeurs de la constante $D_n$ - $D_1$ pour un intervalle donné.

Dans une quatrième étape, le noeud destinataire exploite un modèle de régression entre les délais reçus cumulés déterminés lors de la deuxième étape, en fonction d'un délai d'envoi cumulé et la relation (7).

L'exploitation d'un modèle de régression permet de déterminer les coefficients de la relation (7) qui minimisent l'erreur au sens des moindres carrés entre les points déterminés au moyen de la relation (7) et les valeurs des délais reçus cumulés pour le même délai d'envoi cumulé.

Connaissant la bande passante disponible en sens descendant, respectivement en sens montant, le gestionnaire de la file d'attente adapte le débit d'envoi en sortie du noeud.

La figure 12 est un schéma d'un exemple de structure simplifiée d'un noeud destinataire NOD apte à estimer la bande disponible selon l'invention, destiné à un réseau de télécommunication qui comprend au moins un noeud émetteur et un noeud destinataire. Ces noeuds sont séparés par un lien qui comprend au moins un segment radio sur une partie du lien.

Dans l'exemple de mise en oeuvre illustré par la figure 11, le noeud destinataire est soit le routeur mobile MR, soit l'équipement de réseau qui héberge l'agent mère HA dans leur fonction de noeud destinataire.

Le noeud destinataire NOD est adapté en ce qu'il comprend :

- un moyen de réception (BUF) d'un unique train de N trames de paquets IP/UDP appelés sondes émises à un certain débit (sendrate),
- un moyen μP de calcul de la bande passante disponible Ab pour un flux entre le noeud source et le noeud destinataire en calculant des délais reçus cumulés dynamiquement en temps réel à partir des paquets reçus d'un train de N trames de paquets IP/UDP émis par le noeud source,
- un moyen μP pour remonter au noeud source, la valeur de bande estimée Ab.

Le moyen de réception (BUF) d'un unique train de N trames de paquets IP/UDP à un certain débit (sendrate) est typiquement un espace mémoire qui peut être un buffer, une RAM, etc.

Le moyen μP pour estimer la bande passante disponible est typiquement un moyen programmable, par exemple un microprocesseur micro programmé pour horodater les sondes reçues émises par le noeud source, pour calculer en temps réel les délais reçus cumulés, pour identifier des valeurs atypiques de gigue entre les délais de transmission des paquets successifs et pour effectuer la régression à partir des délais reçus cumulés en fonction d'un délai d'envoi cumulé connaissant les valeurs atypiques de gigue. Le moyen μP pour remonter au noeud source la valeur de bande disponible est typiquement le même moyen programmable que le précédent mais en outre micro programmé spécifiquement pour remonter au noeud source la valeur de bande disponible estimée.

Le noeud destinataire NOD est ainsi adapté pour mettre en oeuvre un procédé d'estimation de la bande passante disponible selon l'invention.

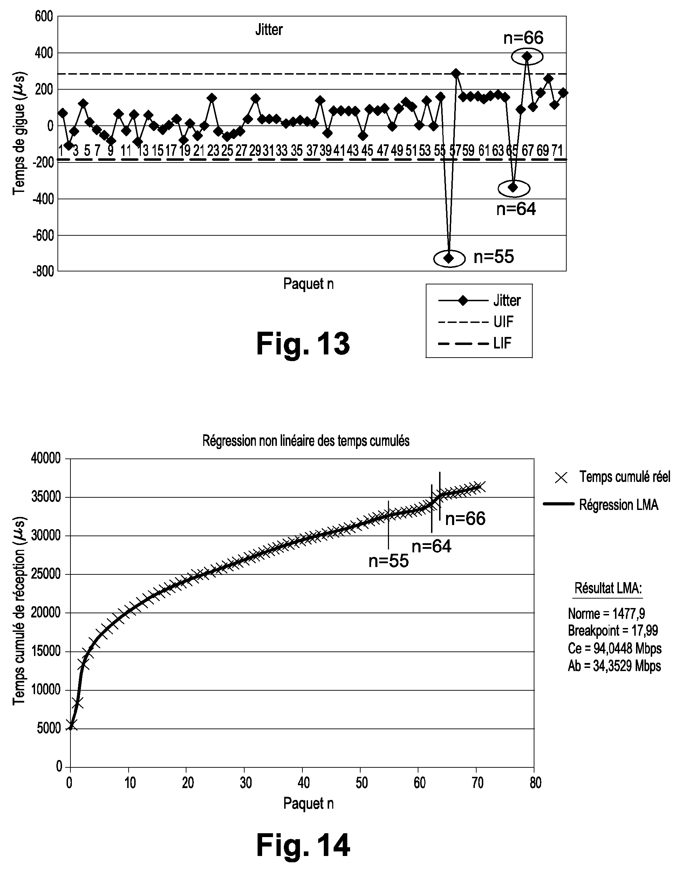

La figure 13 représente des valeurs de gigue (jitter) obtenues lors de l'envoi de sondes selon l'invention. Selon la méthode de la boite à moustache (Box plot), deux seuils sont déterminés : LIF (Lower Inner Fence) et UIF (Upper Inner Fence). Trois valeurs en dehors de ces limites sont identifiés comme atypiques ou anormales avec leur valeur de numéro de paquet correspondant.

La figure 14 représente la courbe des temps cumulés de réception suite à l'envoi de sondes selon l'invention suivant le même exemple que celui illustré par la figure 13. Dans cet exemple, un trafic existant (cross trafic) de type UDP est généré à un débit constant de 60 Mbits/s, partageant un même lien filaire de type Fast Ethernet 100BASE-TX. Les mesures réelles de délais reçus cumulés sont interpolées au moyen de la régression non linéaire LMA. Le calcul des coefficients minimisant l'erreur des moindres carrés permet directement de déterminer la capacité effective Ce et le point de rupture (breakpoint). Ce dernier permet de trouver la bande passante Ab selon la description qui précède de la présente invention. Un changement de constante intervient aux mêmes numéros de paquets ayant des valeurs de gigue atypiques, préalablement identifiées et illustrées à la figure 13.

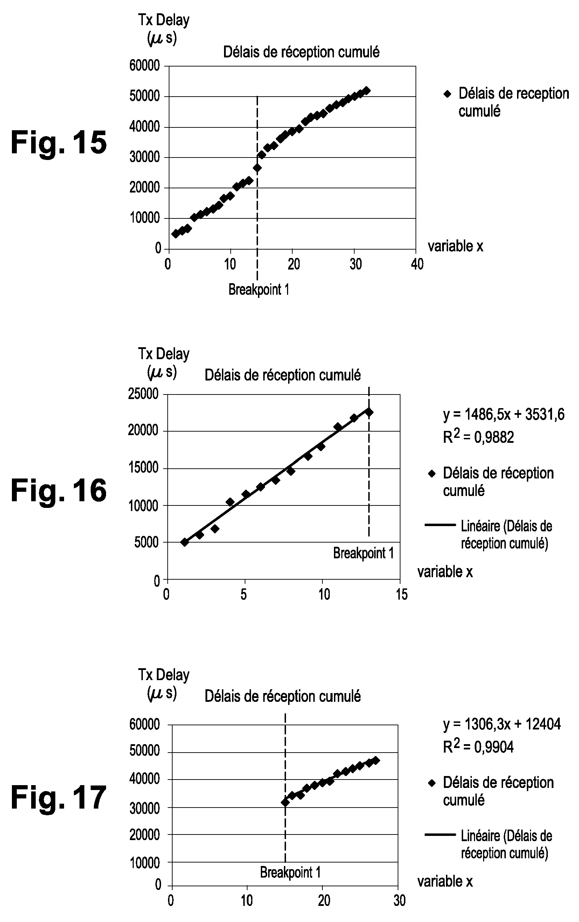

Les figures 15 à 17 représentent une même courbe de résultats de mesures réelles de délais reçus cumulés en fonction du numéro n de paquet (x=n-1). La courbe peut être interpolée par une régression linéaire par morceaux avec un changement permettant de déterminer les deux coefficients des pentes de droites. Le calcul de Ab en découle suivant la description qui précède, sachant que la capacité Ce doit être connue.

[Ref1] : M. Li, M. Claypool, and R. Kinicki. WBest: a bandwidth estimation tool for IEEE 802.11 wireless networks. In Proc. of IEEE LCN, 2008.

[Ref2] : K Madsen, H B Nielsen, O Tingleff: Methods for non-linear least squares problems. (2004).

## Revendications

1.  Procédé (1) d'estimation de la bande passante disponible au niveau de la couche IP pour un flux entre un noeud émetteur et un noeud destinataire séparés par un chemin composé d'un ou plusieurs liens, ce flux étant transporté par un réseau de télécommunication qui peut comprendre au moins un segment radio sur une partie du chemin, le réseau pouvant transporter sur la totalité ou sur une partie du chemin d'autres flux IP, à partir d'un seul train de N trames de paquets IP/UDP généré à un certain débit de transmission, le procédé comprend :

    - une étape (2) de réception par le noeud destinataire de l'unique train de N trames de paquets, une trame comprenant : un champ avec l'adresse IP du noeud émetteur, un champ avec l'adresse IP du noeud destinataire, un champ associé au format d'envoi de la trame, un paquet de taille L comprenant un champ d'horodatage dit date d'émission $t_n^i$ et un champ avec le numéro n du paquet correspondant au numéro n de la trame dans le train, n=1 à N, la réception d'une trame n déclenchant l'association d'une valeur d'horodatage dite date de réception $t_n^o$ au paquet n,

    - à partir du deuxième paquet reçu, une étape (3) de détermination par le noeud destinataire de valeurs de délais reçus cumulés à réception du paquet n, avec n=2 à N : $T_{(n-1)} = t_n^o - t_1^o$ ,

- une étape (4) d'identification par le noeud destinataire de valeurs atypiques de gigue Jitter$_n$ entre les délais

de transmission de paquets successifs, $Jitter_{(n-1)} = (t_{n+1}^o - t_{n+1}^i) - (t_n^o - t_n^i)$,

- une étape (5) d'exploitation par le noeud destinataire d'un modèle de régression appliqué aux délais reçus cumulés en fonction d'un délai d'envoi cumulé prenant en compte les valeurs atypiques de gigue.

**2.** Procédé (1) d'estimation de la bande passante disponible au niveau de la couche IP pour un flux entre un noeud émetteur et un noeud destinataire selon la revendication 1, dans lequel le débit d'envoi est constant et le modèle de régression est linéaire.

**3.** Procédé (1) d'estimation de la bande passante disponible selon la revendication 2 comprenant en outre :

une étape de détermination de la capacité effective au moyen d'un scan du segment radio ou au moyen de l'obtention d'information liée à la Qos.

**4.** Procédé (1) d'estimation de la bande passante disponible au niveau de la couche IP pour un flux entre un noeud émetteur et un noeud destinataire selon la revendication 1, dans lequel le débit d'envoi est variable et le modèle de régression est non linéaire et dans lequel l'étape (5) d'exploitation comprend la recherche d'un point de rupture correspondant à un changement de modèle de régression, à partir des valeurs de délais reçus cumulés déterminés et des valeurs atypiques de gigue.

**5.** Dispositif (NOD) destiné à un réseau de télécommunication, adapté pour la mise en oeuvre d'un procédé d'estimation de la bande passante disponible $A_b$ au niveau de la couche IP pour un flux entre un noeud source et le dispositif séparés par un chemin composé d'un ou plusieurs liens, ce flux étant transporté par un réseau de télécommunication qui peut comprendre au moins un segment radio sur une partie du chemin, le réseau pouvant transporter sur la totalité ou sur une partie du chemin d'autres flux IP, à partir d'un seul train de N trames de paquets IP/UDP généré à un certain débit sendrate de transmission, **caractérisé en ce que** ledit dispositif comprend :

- un moyen de réception (BUF) de l'unique train de N trames de paquets, une trame comprenant : un champ avec l'adresse IP du noeud source, un champ avec l'adresse IP du noeud destinataire, un champ associé au format d'envoi de la trame, un paquet de taille L comprenant un champ d'horodatage dit date d'émission $t_n^i$ et un champ avec le numéro n du paquet correspondant au numéro n de la trame dans le train, n=1 à N, la réception d'une trame n déclenchant l'association d'une valeur d'horodatage dite date de réception $t_n^o$ au paquet n,
- un moyen de détermination ($\mu$P) de valeurs de délais reçus cumulés à réception respectivement des paquets n et à partir du deuxième paquet reçu, avec n=2 à N : $T_{(n-1)} = t_n^o - t_1^o$,

- un moyen d'identification ($\mu$P) de valeurs atypiques de gigue Jitter$_n$ entre les délais de transmission de paquets

successifs, $Jitter_{(n-1)} = (t_{n+1}^o - t_{n+1}^i) - (t_n^o - t_n^i)$,

- un moyen d'exploitation ($\mu$P) d'un modèle de régression appliqué aux délais reçus cumulés en fonction d'un délai d'envoi cumulé prenant en compte les valeurs atypiques de gigue, pour obtenir une estimation de la bande passante.

**6.** Dispositif (NOD) selon la revendication 5 dans lequel le débit sendrate est constant et dans lequel le moyen d'exploitation ($\mu$P) applique un modèle de régression linéaire aux délais reçus cumulés approximés par la relation $T_x = a_i x + b_i$ par segment i identifié par deux valeurs successives de valeurs atypiques de gigue avec $a_i$ la pente et $b_i$ la valeur à l'origine du segment i pour obtenir une estimation de la bande passante à partir de l'expression : $A_b = C_e \left(1 - \frac{a}{L} sendrate\right) + sendrate$ avec Ce la capacité effective, a étant déterminée à partir des valeurs $a_i$.

**7.** Dispositif (NOD) selon la revendication 5, dans lequel le débit (sendrate) est variable et dans lequel le moyen

d'exploitation ($\mu P$) applique un modèle de régression non linéaire et comprend la recherche d'un point de rupture correspondant à un changement de modèle, à partir des valeurs de délais reçus cumulés déterminés et des valeurs atypiques de gigue, pour obtenir une estimation de la bande passante.

8. Système de télécommunication (SYS) pour la mise en oeuvre d'un procédé d'estimation de la bande passante disponible au niveau de la couche IP pour un flux entre un noeud source et un noeud destinataire séparés par un chemin composé d'un ou plusieurs liens selon l'une quelconque des revendications 1 et 2, **caractérisé en ce qu'**il comprend :

   - un noeud source (NOS) et un noeud destinataire (NOD) séparés par le chemin qui peut comprendre au moins un segment radio,

   dans lequel le noeud destinataire (NOD) est selon la revendication 6.

9. Système de télécommunication (SYS) pour la mise en oeuvre d'un procédé d'estimation de la bande passante disponible au niveau de la couche IP pour un flux entre un noeud source et un noeud destinataire séparés par un chemin composé d'un ou plusieurs liens selon la revendication 4, **caractérisé en ce qu'**il comprend :

   - un noeud source (NOS) et un noeud destinataire (NOD) séparés par le chemin qui peut comprendre au moins un segment radio ,
   - un lien de transport des flux entre le noeud source et le noeud destinataire qui peut comprendre au moins un segment radio,

   dans lequel le noeud destinataire (NOD) est selon la revendication 7.

10. Programme d'ordinateur sur un support d'informations, ledit programme comportant des instructions de programme adaptées à la mise en oeuvre d'un procédé (1) d'estimation de la bande passante disponible au niveau de la couche IP pour un flux entre un noeud source et un noeud destinataire séparés par un chemin composé d'un ou plusieurs liens selon l'une quelconque des revendications 1 à 4, lorsque ledit programme est chargé et exécuté dans le noeud destinataire d'un système de télécommunication.

11. Support d'informations comportant des instructions de programme adaptées à la mise en oeuvre d'un procédé (1) d'estimation de la bande passante disponible au niveau de la couche IP pour un flux entre un noeud source et un noeud destinataire séparés par un chemin composé d'un ou plusieurs liens selon l'une quelconque des revendications 1 à 4, lorsque ledit programme est chargé et exécuté dans le noeud destinataire d'un système de télécommunication.

**Patentansprüche**

1. Verfahren (1) zur Schätzung der verfügbaren Bandbreite auf der Ebene der IP-Schicht für einen Fluss zwischen einem Emitterknoten und einem Zielknoten, die durch einen Weg getrennt sind, der aus einer oder mehreren Verbindungen besteht, wobei dieser Fluss durch ein Telekommunikationsnetz transportiert wird, das mindestens ein Funksegment auf einem Teil des Wegs umfassen kann, wobei das Netz auf dem gesamten Weg oder auf einem Teil des Wegs andere IP-Flüsse transportieren kann, aus einem einzigen Strom von N Rahmen von IP/UDP-Paketen, der bei einem bestimmten Transmissionsdurchsatz generiert wird, wobei das Verfahren umfasst:

   - einen Schritt (2) des Empfangs, durch den Zielknoten, des einzigen Stroms von N Rahmen von Paketen, wobei ein Rahmen umfasst: ein Feld mit der IP-Adresse des Emitterknotens, ein Feld mit der IP-Adresse des Zielknotens, ein Feld, das mit dem Sendeformat des Rahmens assoziiert ist, ein Paket mit der Größe L, umfassend ein Zeitstempelfeld, das als Emissionsdatum $t_n^i$ bezeichnet wird, und ein Feld mit der Nummer n des Pakets, das der Nummer n des Rahmens in dem Strom entspricht, wobei n = 1 bis N, wobei der Empfang eines Rahmens n die Assoziation eines Zeitstempelwerts, der als Empfangsdatum $t_n^o$ bezeichnet wird, mit dem Paket n auslöst,
   - ausgehend vom zweiten empfangenen Paket, einen Schritt (3) der Bestimmung, durch den Zielknoten, von Verzögerungswerten, die kumuliert beim Empfang des Pakets n empfangen werden, wobei n = 2 bis N:

$$T_{(n-1)} = t_n^o - t_1^o,$$

- einen Schritt (4) der Identifikation, durch den Zielknoten, von atypischen Werten der Schwankung $\text{Jitter}_n$ zwischen den Transmissionsverzögerungen aufeinanderfolgender Pakete,

$$Jitter_{(n-1)} = (t_{n+1}^o - t_{n+1}^i) - \left( t_n^o - t_n^i \right),$$

- einen Schritt (5) der Erzeugung, durch den Zielknoten, eines Regressionsmodells, das auf die kumulierten Empfangsverzögerungen entsprechend einer kumulierten Sendeverzögerung angewendet wird, wobei die atypischen Schwankungswerte berücksichtigt werden.

2. Verfahren (1) zur Schätzung der verfügbaren Bandbreite auf der Ebene der IP-Schicht für einen Fluss zwischen einem Emitterknoten und einem Zielknoten nach Anspruch 1,
   wobei der Sendedurchsatz konstant ist und das Regressionsmodell linear ist.

3. Verfahren (1) zur Schätzung der verfügbaren Bandbreite nach Anspruch 2, ferner umfassend:

   - einen Schritt der Bestimmung der effektiven Kapazität mittels eines Scans des Funksegments oder mittels des Erhaltens von mit der Qos verbundenen Informationen.

4. Verfahren (1) zur Schätzung der verfügbaren Bandbreite auf der Ebene der IP-Schicht für einen Fluss zwischen einem Emitterknoten und einem Zielknoten nach Anspruch 1,
   wobei der Sendedurchsatz variabel ist und das Regressionsmodell nicht linear ist, und wobei der Schritt (5) der Erzeugung die Suche nach einem Unterbrechungspunkt, der einer Änderung des Regressionsmodells entspricht, aus Werten bestimmter kumulierter Empfangsverzögerungen und atypischen Schwankungswerten umfasst.

5. Vorrichtung (NOD), welche für ein Telekommunikationsnetz bestimmt ist und ausgelegt ist, ein Verfahren zur Schätzung der verfügbaren Bandbreite $A_b$ auf der Ebene der IP-Schicht für einen Fluss zwischen einem Ursprungsknoten und der Vorrichtung durchzuführen, die durch einen Weg getrennt sind, der aus einer oder mehreren Verbindungen besteht, wobei dieser Fluss durch ein Telekommunikationsnetz transportiert wird, das mindestens ein Funksegment auf einem Teil des Wegs umfassen kann, wobei das Netz auf dem gesamten Weg oder auf einem Teil des Wegs andere IP-Flüsse transportieren kann, aus einem einzelnen Strom von N Rahmen von IP/UDP-Paketen, der bei einem bestimmten Transmissionsdurchsatz (sendrate) generiert wird,
   **dadurch gekennzeichnet, dass** die Vorrichtung umfasst:

   - ein Empfangsmittel (BUF) des einzigen Stroms von N Rahmen von Paketen, wobei ein Rahmen umfasst: ein Feld mit der IP-Adresse des Ursprungsknotens, ein Feld mit der IP-Adresse des Zielknotens, ein Feld, das mit dem Sendeformat des Rahmens assoziiert ist, ein Paket mit der Größe L, umfassend ein Zeitstempelfeld, das als Emissionsdatum $t_n^i$ bezeichnet wird, und ein Feld mit der Nummer n des Pakets, das der Nummer n des Rahmens in dem Strom entspricht, wobei n = 1 bis N, wobei der Empfang eines Rahmens n die Assoziation eines Zeitstempelwerts, der als Empfangsdatum $t_n^o$ bezeichnet wird, mit dem Paket n auslöst,
   - ein Bestimmungsmittel ($\mu$P) der kumulierten empfangenen Verzögerungswerte beim Empfang jeweils von Paketen n und ausgehend vom zweiten empfangenen Paket, wobei n = 2 bis N: $T_{(n-1)} = t_n^o - t_1^o,$
   - ein Identifikationsmittel ($\mu$P) der atypischen Schwankungswerte $\text{Jitter}_n$ zwischen den Verzögerungen der Transmission aufeinanderfolgender Pakete,

$$Jitter_{(n-1)} = (t_{n+1}^o - t_{n+1}^i) - \left( t_n^o - t_n^i \right),$$

   - ein Erzeugungsmittel ($\mu$P) eines Regressionsmodells, das auf die kumulierten Empfangsverzögerungen entsprechend einer kumulierten Sendeverzögerung angewendet wird, wobei die atypischen Schwankungswerte berücksichtigt werden, um eine Schätzung der Bandbreite zu erhalten.

6. Vorrichtung (NOD) nach Anspruch 5,
   wobei der Durchsatz (sendrate) konstant ist, und wobei das Erzeugungsmittel ($\mu$P) ein lineares Regressionsmodell auf die angenäherten kumulierten Empfangsverzögerungen durch die Beziehung $T_x = a_i x + b_i$ pro Segment i an-

wendet, das durch zwei aufeinanderfolgende Werte der atypischen Schwankungswerte identifiziert wird, wobei $a_i$ die Steilheit ist und $b_i$ der Wert am Ursprung des Segments i ist, um eine Schätzung der Bandbreite aus dem folgenden Ausdruck zu erhalten:

$$A_b = \quad C_e \left( 1 - \frac{a}{L} sendrate \right) +$$

$sendrate$ , wobei $C_e$ die effektive Kapazität ist, wobei a aus den Werten $a_i$ bestimmt wird.

7. Vorrichtung (NOD) nach Anspruch 5,
wobei der Durchsatz (sendrate) variabel ist, und wobei das Erzeugungsmittel ($\mu$P) ein nicht-lineares Regressionsmodell anwendet und die Suche nach einem Unterbrechungspunkt, der einer Änderung des Modells entspricht, aus Werten bestimmter kumulierter Empfangsverzögerungen und atypischen Schwankungswerten umfasst, um eine Schätzung der Bandbreite zu erhalten.

8. Telekommunikationssystem (SYS) zur Durchführung eines Verfahrens zur Schätzung der verfügbaren Bandbreite auf der Ebene der IP-Schicht für einen Fluss zwischen einem Ursprungsknoten und einem Zielknoten, die durch einen Weg getrennt sind, der aus einer oder mehreren Verbindungen besteht, nach einem der Ansprüche 1 und 2, **dadurch gekennzeichnet, dass** dieses umfasst:

   - einen Ursprungsknoten (NOS) und einen Zielknoten (NOD), die durch den Weg getrennt sind, der mindestens ein Funksegment umfassen kann,

   wobei der Zielknoten (NOD) nach Anspruch 6 ist.

9. Telekommunikationssystem (SYS) zur Durchführung eines Verfahrens zur Schätzung der verfügbaren Bandbreite auf der Ebene der IP-Schicht für einen Fluss zwischen einem Ursprungsknoten und einem Zielknoten, die durch einen Weg getrennt sind, der aus einer oder mehreren Verbindungen besteht, nach Anspruch 4, **dadurch gekennzeichnet, dass** dieses umfasst:

   - einen Ursprungsknoten (NOS) und einen Zielknoten (NOD), die durch den Weg getrennt sind, der mindestens ein Funksegment umfassen kann,
   - eine Transportverbindung von Flüssen zwischen dem Ursprungsknoten und dem Zielknoten, die mindestens ein Funksegment umfassen kann,

   wobei der Zielknoten (NOD) nach Anspruch 7 ist.

10. Rechnerprogramm auf einem Informationsträger, wobei das Programm Programminstruktionen umfasst, die ausgelegt sind, ein Verfahren (1) zur Schätzung der verfügbaren Bandbreite auf der Ebene der IP-Schicht für einen Fluss zwischen einem Ursprungsknoten und einem Zielknoten, die durch einen Weg getrennt sind, der aus einer oder mehreren Verbindungen besteht, nach einem der Ansprüche 1 bis 4 durchzuführen, wenn das Programm geladen und in dem Zielknoten eines Telekommunikationssystems ausgeführt wird.

11. Informationsträger, umfassend Programminstruktionen, die ausgelegt sind, ein Verfahren (1) zur Schätzung der verfügbaren Bandbreite auf der Ebene der IP-Schicht für einen Fluss zwischen einem Ursprungsknoten und einem Zielknoten, die durch einen Weg getrennt sind, der aus einer oder mehreren Verbindungen besteht, nach einem der Ansprüche 1 bis 4 durchzuführen, wenn das Programm geladen und in dem Zielknoten eines Telekommunikationssystems ausgeführt wird.

**Claims**

1. Method (1) for estimating the passband available at the level of the IP layer for a stream between a sender node and a destination node that are separated by a path composed of one or more links, this stream being transported by a telecommunication network which can comprise at least one radio segment over a part of the path, the network being able to transport other IP streams over the whole or over a part of the path, on the basis of a single train of N frames of IP/UDP packets which is generated at a certain transmission bitrate, the method comprises:

- a step (2) of reception by the destination node of the single train of N frames of packets, a frame comprising: a field with the IP address of the sender node, a field with the IP address of the destination node, a field associated with the sending format of the frame, a packet of size L comprising a time-stamping field termed the send date $t^i_n$ and a field with the index number n of the packet corresponding to the index number n of the frame in the train, n=1 to N, the reception of a frame n triggering the association of a time-stamping value termed the receive date $t^0_n$ with the packet n,

- starting from the second packet received, a step (3) of determination by the destination node of values of cumulative received delays on receipt of the packet n, with n=2 to N: $T_{(n-1)} = t^0_n - t^0_1$,

- a step (4) of identification by the destination node of atypical values of jitter $Jitter_n$ between the transmission delays of successive packets, $Jitter_{(n-1)} = (t^0_{n+1} - t^i_{n+1}) - (t^0_n - t^i_n)$

- a step (5) of utilization by the destination node of a regression model applied to the cumulative received delays as a function of a cumulative sending delay taking into account the atypical values of jitter.

2. Method (1) for estimating the passband available at the level of the IP layer for a stream between a sender node and a destination node according to Claim 1, in which the sending bitrate is constant and the regression model is linear.

3. Method (1) for estimating the available passband according to Claim 2 furthermore comprising:

   - a step of determining the effective capacity by means of a scan of the radio segment or by means of the obtaining of information related to the Qos.

4. Method (1) for estimating the passband available at the level of the IP layer for a stream between a sender node and a destination node according to Claim 1, in which the sending bitrate is variable and the regression model is nonlinear and in which the utilization step (5) comprises the search for a break point corresponding to a change of regression model, on the basis of the determined values of cumulative received delays and of the atypical values of jitter.

5. Device (NOD) intended for a telecommunication network, adapted for the implementation of a method for estimating the available passband $A_b$ at the level of the IP layer for a stream between a source node and the device that are separated by a path composed of one or more links, this stream being transported by a telecommunication network which can comprise at least one radio segment over a part of the path, the network being able to transport other IP streams over the whole or over a part of the path, on the basis of a single train of N frames of IP/UDP packets which is generated at a certain transmission bitrate *sendrate,* **characterized in that** said device comprises:

   - a reception means (BUF) for receiving the single train of N frames of packets, a frame comprising: a field with the IP address of the source node, a field with the IP address of the destination node, a field associated with the sending format of the frame, a packet of size L comprising a time-stamping field termed the send date $t^i_n$ and a field with the index number n of the packet corresponding to the index number n of the frame in the train, n=1 to N, the reception of a frame n triggering the association of a time-stamping value termed the receive date $t^0_n$ with the packet n,

   - a determination means ($\mu P$) for determining values of cumulative received delays on receipt respectively of the packets n and starting from the second packet received, with n=2 to N: $T_{(n-1)} = t^0_n - t^0_1$,

   - an identification means ($\mu P$) for identifying atypical values of jitter $Jitter_n$ between the transmission delays of successive packets, $Jitter_{(n-1)} = (t^0_{n+1} - t^i_{n+1}) - (t^0_n - t^i_n)$,

   - a utilization means ($\mu P$) for utilizing a regression model applied to the cumulative received delays as a function of a cumulative sending delay taking into account the atypical values of jitter, so as to obtain an estimation of the passband.

6. Device (NOD) according to Claim 5 in which the bitrate *sendrate* is constant and in which the utilization means ($\mu P$) applies a linear regression model to the cumulative received delays approximated by the relation $T_x = a_i x + b_i$ per segment i identified by two successive values of atypical values of jitter with $a_i$ the slope and $b_i$ the value at the origin of the segment i so as to obtain an estimation of the passband on the basis of the expression: $A_b = C_e (1 - a/L\ sendrate) + sendrate$ with $C_e$ the effective capacity, a being determined on the basis of the values $a_i$.

7. Device (NOD) according to Claim 5, in which the bitrate *(sendrate)* is variable and in which the utilization means ($\mu P$) applies a nonlinear regression model and comprises the search for a break point corresponding to a change of model, on the basis of the values of cumulative received delays determined and of the atypical values of jitter, so as to obtain an estimation of the passband.

8. Telecommunication system (SYS) for the implementation of a method for estimating the passband available at the level of the IP layer for a stream between a source node and a destination node that are separated by a path composed of one or more links according to either of Claims 1 and 2, **characterized in that** it comprises:

   - a source node (NOS) and a destination node (NOD) that are separated by the path which can comprise at least one radio segment,

   in which the destination node (NOD) is according to Claim 6.

9. Telecommunication system (SYS) for the implementation of a method for estimating the passband available at the level of the IP layer for a stream between a source node and a destination node that are separated by a path composed of one or more links according to Claim 4, **characterized in that** it comprises:

   - a source node (NOS) and a destination node (NOD) that are separated by the path which can comprise at least one radio segment,
   - a link for transporting the streams between the source node and the destination node which can comprise at least one radio segment,

   in which the destination node (NOD) is according to Claim 7.

10. Computer program on an information medium, said program comprising program instructions suitable for the implementation of a method (1) for estimating the passband available at the level of the IP layer for a stream between a source node and a destination node that are separated by a path composed of one or more links according to any one of Claims 1 to 4, when said program is loaded and executed in the destination node of a telecommunication system.

11. Information medium comprising program instructions suitable for the implementation of a method (1) for estimating the passband available at the level of the IP layer for a stream between a source node and a destination node that are separated by a path composed of one or more links according to any one of Claims 1 to 4, when said program is loaded and executed in the destination node of a telecommunication system.

Fig. 1

Fig. 2

**Fig. 3**

$$C_t = C_1$$ 
$$C_e = C_3$$

**Fig. 4**

Phase 1:

n packet pairs

$\Delta t_4$  $\Delta t_3$  $\Delta t_2$  $\Delta t_1$

émission                réception

Phase 2:

Packet train of length m at rat Ce

$\Delta t_6$  $\Delta t_4$

$\Delta t_5$  $\Delta t_3$  $\Delta t_1$

$\Delta t_7$  $\Delta t_2$

émission                réception

## Fig. 5

wired Ntk 3 hops (IP links)            Wireless mesh Ntk
2 hops (IP links)

Path

h=1         h=2         h=3=Hw      h=4         h=5=H

Sender
(Input)                                                Receiver
(Output)

L          C1          C2          C3                      C5$_n$

$t_n^i$   $\Delta q_n^1$ $\dfrac{L_n}{C^1}$ $D^1$ $\Delta q_n^2$ $\dfrac{L_n}{C^2}$ $D^2$ $\Delta q_n^3$ $\dfrac{L_n}{C^3}$ $D^3$ $\Delta q_n^4 \dfrac{L_n}{C4_n}$ $n^4$ $\Delta q_n^5 \dfrac{L_n}{C_n^5}$ $D_n^5$   $t$ $t_n^0$

## Fig. 6

**Fig. 7**

| @IP Send | @IP Receiv | UDP | TimSend | n° | Opt.DataPayload |
|----------|-----------|-----|---------|-----|-----------------|

L

NOE

| IP | UDP | Prob n |
|----|-----|--------|

NOD

| IP | UDP | Prob n |
|----|-----|--------|

**Fig. 8**

$t_n^i$     $t_n^0$     t

Application terminal mobile          UTRAN          GGSN          Application

(Nodeb + RNC)     Information Ce L3 (3)

Information Ce L2 (2)

| Recepteur |
|-----------|

| UDP | TCP |
|-----|-----|
| IP | |
| PDCP | |
| RLC | |
| MAC | |
| WCDMA | |

| PDCP | GTP-U |
|------|-------|
| RLC | UDP |
| | IP |
| MAC | AAL5 |
| WCDMA | ATM |

| IP | |
|----|---|
| GTP-U | L2 |
| UDP | |
| IP | |
| L2 | L1 |
| L1 | |

| Emetteur |
|----------|

| TCP | UDP |
|-----|-----|
| IP | |
| L2 | |
| | |
| L1 | |

Scan Ce L2 segment radio (1)
(fonction du MCS)

**Fig. 9**

28

Application
terminal mobile

GGSN

Application

| Recepteur | | (Nodeb + RNC) | | | | | Emetteur | |
|---|---|---|---|---|---|---|---|---|

Information
Ce L3 Qos

Information
Ce L3 Qos

| UDP | TCP | | | | | | TCP | UDP |
|---|---|---|---|---|---|---|---|---|
| IP | | | IP | | | | IP | |
| PDCP | | | GTP-U | L2 | | | L2 | |
| RLC | | | UDP | | | | | |
| MAC | | | IP | | | | | |
| WCDMA | | | L2 | L1 | | | L1 | |
| | | | L1 | | | | | |

PDP Context message=> MBR

## Fig. 10

NOD

BUF

Ab

μ P

## Fig. 12

EA    VS

A,HA

NOD

ETH    AR

Fig. 11

AP WiFi 1    AP WiFi 2

IS

B

NOE

MR

USER

Mobile
Network

**Fig. 13**

**Fig. 14**

Tx Delay
($\mu$ s)

Délais de réception cumulé

**Fig. 15**

◆ Délais de reception cumulé

variable x

Breakpoint 1

Tx Delay
($\mu$ s)

Délais de réception cumulé

**Fig. 16**

$y = 1486,5x + 3531,6$
$R^2 = 0,9882$

◆ Délais de réception cumulé

— Linéaire (Délais de réception cumulé)

variable x

Breakpoint 1

Tx Delay
($\mu$ s)

Délais de réception cumulé

**Fig. 17**

$y = 1306,3x + 12404$
$R^2 = 0,9904$

◆ Délais de réception cumulé

— Linéaire (Délais de réception cumulé)

variable x

Breakpoint 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008073610 A

**Littérature non-brevet citée dans la description**

- **M. LI ; M. CLAYPOOL ; R. KINICKI.** WBest: a bandwidth estimation tool for IEEE 802.11 wireless networks. *Proc. of IEEE LCN,* 2008

- **K MADSEN ; H B NIELSEN ; O TINGLEFF.** *Methods for non-linear least squares problems,* 2004